# EUROPEAN PATENT APPLICATION

(11) **EP 4 852 500 A1**
(43) Date of publication of application: **09.12.2026**
(21) Application number: 24920916.4
(22) Date of filing: 31.01.2024
(51) Int. Cl.: H04W 24/10, H04W 24/08

(54) **COMMUNICATION METHOD, DEVICE, COMMUNICATION SYSTEM, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2024/075075
(87) International publication number: WO 2025/160849

(57) **Abstract**

A communication method, a device, a communication system, and a storage medium. The method comprises: a terminal sending first data and second data, wherein the first data is data related to derivation of an artificial intelligence (AI) model, and the data related to the derivation of the AI model comprises data input by the AI model or data output from the AI model; and the second data comprises actual measurement data corresponding to the data output from the AI model, and the AI model is used for predicting beam information of a beam and/or a beam pair. Therefore, a network device can reliably monitor an AI model on the basis of first data and second data, such that the reliability of the currently used AI model can be effectively ensured, thereby ensuring the stability of communication.

## Description

### TECHNICAL FIELD

The present disclosure relates to the technical field of communication, and in particular to a communication method, device, communication system, and storage medium.

### BACKGROUND

A base station may configure a reference signal resource set for beam measurement for a terminal. After measuring reference signal resources in the reference signal resource set, the terminal may report identities of one or more relatively strong reference signal resources as well as corresponding Layer 1-Reference Signal Received Power (L1-RSRP) and/or Layer 1-Signal-to-Interference-Noise Ratio (L1-SINR). To reduce overhead for measuring beams and/or beam pairs, an Artificial Intelligence (AI) model may be adopted to predict beam information.

### SUMMARY

The present disclosure provides in embodiments a communication method, device, communication system, and storage medium.

According to a first aspect of embodiments of the present disclosure, there is provided a communication method, including:
transmitting, by a terminal, first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair.

According to a second aspect of embodiments of the present disclosure, there is provided a communication method, including:
receiving, by a network device, first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair.

According to a third aspect of embodiments of the present disclosure, there is provided a terminal, including:
a transceiving module, configured to transmit first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair.

According to a fourth aspect of embodiments of the present disclosure, there is provided a network device, including:
a transceiving module, configured to receive first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair.

According to a fifth aspect of embodiments of the present disclosure, there is provided a terminal, including:
one or more processors;
a memory coupled to the one or more processors and including executable instructions that, when executed by the one or more processors, cause the terminal to perform the communication method according to the communication method according to the first aspect.

According to a sixth aspect of embodiments of the present disclosure, there is provided a network device, including:
one or more processors;
a memory coupled to the one or more processors and including executable instructions that, when executed by the one or more processors, cause the network device to perform the communication method according to the second aspect.

According to a seventh aspect of embodiments of the present disclosure, there is provided a communication system, including a terminal and a network device, where the terminal is configured to implement the communication method according to the first aspect, and the network device is configured to implement the communication method according to the second aspect.

According to an eighth aspect of embodiments of the present disclosure, there is provided a storage medium, which stores instructions that, when executed on a communication device, cause the communication device to perform the communication method according to the first or second aspect.

According to the aforementioned embodiments, the terminal may transmit both the first and second data, such that the network device can reliably monitor the AI model based on the first data and the second data, thus to effectively ensure the reliability of the currently deployed AI model, thereby ensuring communication stability.

### BRIEF DESCRIPTION OF THE DRAWINGS

A brief description will be made to the accompanying drawings as required in embodiments, to illustrate the technical solutions in the embodiments of the disclosure more clearly. However, the accompanying drawings set forth in the following description merely illustrate some embodiments of the disclosure, and shall not limit the protection scope thereof.
FIG. 1 is an exemplary schematic diagram illustrating an architecture of a communication system according to an embodiment of the disclosure.
FIG. 2A is an interactive schematic diagram illustrating a communication method according to an embodiment of the present disclosure.
FIG. 2B is an interactive schematic diagram illustrating a communication method according to an embodiment of the present disclosure.
FIG. 3A is a schematic flowchart illustrating a communication method according to an embodiment of the present disclosure.
FIG. 3B is a schematic flowchart illustrating a communication method according to an embodiment of the present disclosure.
FIG. 3C is a schematic flowchart illustrating a communication method according to an embodiment of the present disclosure.
FIG. 3D is a schematic flowchart illustrating a communication method according to an embodiment of the present disclosure.
FIG. 3E is a schematic flowchart illustrating a communication method according to an embodiment of the present disclosure.
FIG. 4A is a schematic flowchart illustrating a communication method according to an embodiment of the present disclosure.
FIG. 4B is a schematic flowchart illustrating a communication method according to an embodiment of the present disclosure.
FIG. 4C is a schematic flowchart illustrating a communication method according to an embodiment of the present disclosure.
FIG. 4D is a schematic flowchart illustrating a communication method according to an embodiment of the present disclosure.
FIG. 4E is a schematic flowchart illustrating a communication method according to an embodiment of the present disclosure.
FIG. 5 is an interactive schematic diagram illustrating a communication method according to an embodiment of the present disclosure.
FIG. 6 is a schematic flowchart illustrating a communication method according to an embodiment of the present disclosure.
FIG. 7A is an exemplary block diagram illustrating a structure of a terminal according to an embodiment of the present disclosure.
FIG. 7B is an exemplary block diagram illustrating a structure of a network device according to an embodiment of the present disclosure.
FIG. 8A is an exemplary block diagram illustrating a structure of a communication device according to an embodiment of the present disclosure.
FIG. 8B is an exemplary block diagram illustrating a structure of a communication device according to an embodiment of the present disclosure.

### DETAILED DESCRIPTION

The present disclosure provides in embodiments a communication method, device, communication system, and storage medium.

In a first aspect, the present disclosure provides in embodiments a communication method, including:
transmitting, by a terminal, first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair.

According to the aforementioned embodiments, the terminal may transmit both the first and second data, such that the network device can reliably monitor the AI model based on the first data and the second data, thus to effectively ensure the reliability of the currently deployed AI model, thereby ensuring communication stability.

In combination with some embodiments of the first aspect, in some embodiments, the AI model performs a spatial-domain beam prediction, configured to predict, according to an actual measurement result of a first beam set, beam information of a second beam set; or
the AI model performs a time-domain beam prediction, configured to predict, according to an actual measurement result of a first beam set at N historical measurement time instance(s), beam information of a second beam set at M prediction time instance(s),
where the first beam set and the second beam set meet a preset condition, and both N and M are integers greater than or equal to 1.

According to the aforementioned embodiments, it is possible to effectively monitor both the model performing a spatial-domain beam prediction and the model performing a time-domain beam prediction, which ensures the reliability of the two types of AI models.

In combination with some embodiments of the first aspect, in some embodiments, the preset condition includes at least one of the following:
the first beam set being identical to the second beam set;
the first beam set being a subset of the second beam set; or
the first beam set being of wide beams, and the second beam set being of narrow beams corresponding to the first beam set.

According to the aforementioned embodiments, based on the AI model, the terminal may only perform actual measurement on part of beams or beam pairs, or perform measurement on beams or beam pairs only at partial time instants, thereby effectively reducing power consumption of the terminal.

In combination with some embodiments of the first aspect, in some embodiments, the AI model is deployed on the terminal, and the first data is the data output from the AI model; or
the AI model is deployed on a network device, and the first data is the data input to the AI model.

According to the aforementioned embodiments, as the AI model is deployed on different devices, the terminal may transmit different data, thereby effectively ensuring the reliability of AI model performance detection.

In combination with some embodiments of the first aspect, in some embodiments, the the terminal transmitting the first data and the second data includes:
the terminal transmitting a first report including both the first data and the second data; or
the terminal transmitting a second report including the first data and a third report including the second data, separately.

According to the aforementioned embodiments, the terminal may either transmit the first data together with the second data, or transmit them separately, which ensures the effectiveness of AI model monitoring under various scenarios.

In combination with some embodiments of the first aspect, in some embodiments, the terminal transmitting the first report includes at least one of:
transmitting the first report based on a radio resource control (RRC) signaling or a medium access control control element (MAC CE); or
transmitting the first report based on uplink control information (UCI).

According to the aforementioned embodiments, the terminal may transmit the first report through multiple manners, which effectively improves flexibility of data reporting and meets diverse reporting requirements.

In combination with some embodiments of the first aspect, in some embodiments, the first report includes at least one data sample each including one instance of first sample data and one instance of second sample data corresponding to the one instance of the first sample data, where the first sample data is a sample instance of the first data, and the second sample data is a sample instance of the second data.

According to the aforementioned embodiments, configuring data samples where each data sample includes an instance of the first sample data and an instance of the second sample data associated therewith, enables the network device to accurately match model derivation-related data with actual measurement data one-to-one, thereby guaranting accuracy of performance monitoring.

In combination with some embodiments of the first aspect, in some embodiments, the terminal separately transmitting the second report and the third report includes:
the terminal transmitting the second report based on UCI; and
the terminal transmitting the third report based on a RRC signaling or a MAC CE.

According to the aforementioned embodiments, the terminal may transmit the first data with critical latency requirements via UCI, while transmit the second data with loose latency requirements via a RRC signaling or MAC CE, which effectively utilizes resources while guaranteeing reliability of AI model performance detection.

In combination with some embodiments of the first aspect, in some embodiments, the second report includes X instance(s) of first sample data, and the third report includes Y instance(s) of second sample data, with one instance of the second sample data corresponding to one instance of the first sample data, where the first sample data is a sample instance of the first data, the second sample data is a sample instance of the second data, and both X and Y are positive integers, with Y being less than or equal to X.

According to the aforementioned embodiments, each instance of the second sample data tranmitted by the terminal may correspond to one instance of the first sample data, enabling the network device to accurately monitor the AI model performance based on these instances of the first and second sample data.

In combination with some embodiments of the first aspect, in some embodiments, the terminal transmitting the second report based on UCI includes:
the terminal transmitting the second report via at least one instance of the UCI, each instance of the UCI including one instance of first sample data and/or first information, where the first information is configured to indicate that the first sample data included in the each UCI is the i-th instance of the first sample data among the X instance(s) of the first sample data contained in the second report.

According to the aforementioned embodiments, by carrying the first information in the UCI to indicate respective index/indices i of the instance(s) of the first sample data, it enables the network device to reliably determine the instance of the second sample data corresponding to each instance of the first sample data based on the index i, such that the network device can accurately match the model derivation-related data with actual measurement data one-to-one, thereby guaranting accuracy of performance monitoring.

In combination with some embodiments of the first aspect, in some embodiments, the method includes:
setting the "i" corresponding to a next instance of the UCI to be transmitted by the terminal to 1 upon the terminal determining that second information is received, where the second information is configured to indicate that a network device has received L instance(s) of the first sample data and/or the second sample data; or
setting the "i" corresponding to a next instance of the UCI to be transmitted by the terminal to 1, upon the terminal determining that the "i" corresponding to a currently transmitted instance of the UCI reaches L, and/or the number of instance(s) of the second sample data that has been transmitted reaches L.

According to the aforementioned embodiments, by setting L, the terminal may reset i to 1 upon the number of instance(s) of the first sample data and/or second sample data as transmitted reaches L, or the network device may reset i to 1 upon determining that the number of instance(s) of the first sample data and/or second sample data it has received reaches L. This can effectively reduce the computational overhead and thus power consumption of the device.

In combination with some embodiments of the first aspect, in some embodiments, the third report includes L instance(s) of the second sample data, which respectively correspond to the instance(s) of the first sample data in a preset order; or
the third report includes third information configured to indicate a quantity of the instance(s) of the second sample data in the third report, and the instance(s) of the second sample data respectively correspond to the instance(s) of the first sample data in the preset order; or the third information includes L bit(s), where each bit is configured to indicate whether the third report includes an instance of second sample data corresponding to the each bit.

According to the aforementioned embodiments, the quantity of the instance(s) of the second sample data in the third report may be indicated through one or more manners mentioned above, enabling the network device to determine the corresponding instance of the second sample data for each instance of the first sample data based on the corresponding manner, so as to match model derivation-related data with actual measurement data one-to-one and guarantee accuracy of performance monitoring.

In combination with some embodiments of the first aspect, in some embodiments, the method includes: receiving, by the terminal, fourth information configured to indicate a value of L; determining, by the terminal, a value of L according to the quantity of instance(s) of the second sample data in the third report; or determining, by the terminal, a value of L preset by a protocol.

According to the aforementioned embodiments, a value of L may be determined through one or more manners mentioned above, which effectively enhances the flexibility of AI model detection.

In combination with some embodiments of the first aspect, in some embodiments, the AI model performs a spatial-domain beam prediction, where
the AI model is deployed on a network device, the first sample data includes an actual measurement result of the first beam set, and the second sample data includes an actual measurement result of the second beam set; or
the AI model is deployed on the terminal, the first sample data includes predicted beam information of the second beam set, and the second sample data includes an actual measurement result of the second beam set.

In combination with some embodiments of the first aspect, in some embodiments, the AI model performs a time-domain beam prediction, where
the AI model is deployed on a network device, the first sample data includes an actual measurement result of a first beam set at N historical measurement time instance(s), and the second sample data includes an actual measurement result of a second beam set at M prediction time instance(s); or
the AI model is deployed on the terminal, the first sample data includes predicted beam information at M prediction time instance(s), and the second sample data includes an actual measurement result at M prediction time instance(s).

In combination with some embodiments of the first aspect, in some embodiments, the method includes:
receiving, by the terminal, fifth information configured to activate or deactivate the AI model.

According to the aforementioned embodiments, the terminal may determine whether the corresponding AI model is activated or needs to be activated by receiving the fifth information transmitted by the network device, thereby ensuring that the currently deployed AI model is a model with better performance, therby further guaranteeing the reliability of communication.

In a second aspect, the present disclosure provides in embodiments a communication method, including:
receiving, by a network device, first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair.

In combination with some embodiments of the second aspect, in some embodiments, the AI model performs a spatial-domain beam prediction, configured to predict, according to an actual measurement result of a first beam set, beam information of a second beam set; or
the AI model performs a time-domain beam prediction, configured to predict, according to an actual measurement result of a first beam set at N historical measurement time instance(s), beam information of a second beam set at M prediction time instance(s),
where the first beam set and the second beam set meet a preset condition, and both N and M are integers greater than or equal to 1.

In combination with some embodiments of the second aspect, in some embodiments, the preset condition includes at least one of the following:
the first beam set being identical to the second beam set;
the first beam set being a subset of the second beam set; or
the first beam set being of wide beams, and the second beam set being of narrow beams corresponding to the first beam set.

In combination with some embodiments of the second aspect, in some embodiments, the AI model is deployed on a terminal, and the first data is the data output from the AI model; or
the AI model is deployed on the network device, and the first data is the data input to the AI model.

In combination with some embodiments of the second aspect, in some embodiments, the network device receiving the first data and the second data includes:
the network device receiving a first report including both the first data and the second data; or
the network device receiving a second report including the first data and a third report including the second data, separately.

In combination with some embodiments of the second aspect, in some embodiments, the network device receiving the first report includes at least one of:
the network device receiving the first report based on a radio resource control (RRC) signaling or a medium access control control element (MAC CE); or
the network device receiving the first report based on uplink control information (UCI).

In combination with some embodiments of the second aspect, in some embodiments, the first report includes at least one data sample each including one instance of first sample data and one instance of second sample data corresponding to the one instance of the first sample data, where the first sample data is a sample instance of the first data, and the second sample data is a sample instance of the second data.

In combination with some embodiments of the second aspect, in some embodiments, the network device separately receiving the second report and the third report includes:
the network device receiving the second report based on UCI;
the network device receiving the third report based on a RRC signaling or a MAC CE.

In combination with some embodiments of the second aspect, in some embodiments, the second report includes X instance(s) of first sample data, and the third report includes Y instance(s) of second sample data, with one instance of the second sample data corresponding to one instance of the first sample data, where the first sample data is a sample instance of the first data, the second sample data is a sample instance of the second data, and both X and Y are positive integers, with Y being less than or equal to X.

In combination with some embodiments of the second aspect, in some embodiments, the network device receiving the second report based on UCI includes:
the network device receivingthe second report via at least one instance of the UCI, each instance of the UCI including one instance of first sample data and/or first information, where the first information is configured to indicate that the first sample data included in the each UCI is the i-th instance of the first sample data among the X instance(s) of the first sample data contained in the second report.

In combination with some embodiments of the second aspect, in some embodiments, the method includes:
the network device transmitting second information upon determining that L instance(s) of the first sample data and/or the second sample data has been received, where the second information is configured to instruct a terminal to set the "i" corresponding to a next instance of the UCI to be transmitted by the terminal to 1.

In combination with some embodiments of the second aspect, in some embodiments, the third report includes L instance(s) of the second sample data, which respectively correspond to the instance(s) of the first sample data in a preset order; or
the third report includes third information configured to indicate a quantity of the instance(s) of the second sample data in the third report, and the instance(s) of the second sample data respectively correspond to the instance(s) of the first sample data in the preset order; or the third information includes L bit(s), where each bit is configured to indicate whether the third report includes an instance of second sample data corresponding to the each bit.

In combination with some embodiments of the second aspect, in some embodiments, the method includes:
transmitting, by the network device, fourth information configured to indicate a value of L.

In combination with some embodiments of the second aspect, in some embodiments, the AI model performs a spatial-domain beam prediction, where
the AI model is deployed on a network device, the first sample data includes an actual measurement result of the first beam set, and the second sample data includes an actual measurement result of the second beam set; or
the AI model is deployed on the terminal, the first sample data includes predicted beam information of the second beam set, and the second sample data includes an actual measurement result of the second beam set.

In combination with some embodiments of the second aspect, in some embodiments, the AI model performs a time-domain beam prediction, where
the AI model is deployed on a network device, the first sample data includes an actual measurement result of a first beam set at N historical measurement time instance(s), and the second sample data includes an actual measurement result of a second beam set at M prediction time instance(s); or
the AI model is deployed on the terminal, the first sample data includes predicted beam information at M prediction time instance(s), and the second sample data includes an actual measurement result at M prediction time instance(s).

In combination with some embodiments of the second aspect, in some embodiments, the method includes:
transmitting, by the network device, the fifth information configured to activate or deactivate the AI model.

In a third aspect, the present disclosure provides in embodiments a terminal, including:
a transceiving module, configured to transmit first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair.

In a fourth aspect, the present disclosure provides in embodiments a network device, including:
a transceiving module, configured to receive first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair.

In a fifth aspect, the present disclosure provides in embodiments a terminal, including: one or more processors; a memory coupled to the one or more processors and including executable instructions that, when executed by the one or more processors, cause the terminal to perform the communication method according to the communication method according to the first aspect.

In a sixth aspect, the present disclosure provides in embodiments a network device, including: one or more processors; a memory coupled to the one or more processors and including executable instructions that, when executed by the one or more processors, cause the network device to perform the communication method according to the second aspect.

In a seventh aspect, the present disclosure provides in embodiments a communication system, including a terminal and a network device, where the terminal is configured to implement the communication method described in optional implementations in the first aspect, and the network device is configured to implement the communication method according to optional implementations in the second aspect.

In an eighth aspect, the present disclosure provides in embodiments a storage medium which stores instructions that, when executed on a communication device, cause the communication device to perform the communication method according to the optional implementation of the first aspect to the second aspect.

In a ninth aspect, the present disclosure provides in embodiments a program product. When the program product is executed by a communication device, the communication device is caused to perform the method according to the optional implementation of the first aspect to the second aspect.

In a tenth aspect, the present disclosure provides in embodiments a computer program which, when executed on a computer, enables the computer to perform the method according to the optional implementation of the first aspect to the second aspect.

In an eleventh aspect, the present disclosure provides in embodiments a chip or chip system. The chip or chip system includes a processing circuit configured to execute the method according to the optional implementation of the first aspect to the second aspect.

In a twelfth aspect, the present disclosure provides in embodiments a communication method, which is applied to a communication system including a terminal and a network device. The method includes:
determining, by the terminal, the terminal being located in a near-field area and a first codeword in a near-field codebook, where the near-field codebook is determined based on a candidate first basis vector being a basis vector for the near-field area.

In combination with some embodiments of the twelfth aspect, in some embodiments, the method includes:
transmitting, by the terminal, first information to the network device; where the first information is configured to indicate the first codeword, or the first information is configured to indicate the near-field codebook.

In combination with some embodiments of the twelfth aspect, in some embodiments, the method includes:
transmitting, by the terminal, second information to the network device; where the second information is configured to indicate a co-phase coefficient corresponding to the first codeword.

In combination with some embodiments of the twelfth aspect, in some embodiments, the method includes:
receiving, by the network device, third information transmitted by the terminal; where the third information is configured to indicate that the terminal switches between a far-field area and a near-field area.

It can be understood that the aforementioned terminal, network device, communication system, storage medium, program product, computer program, and chip or chip system are all used to perform the methods according to the embodiments of the disclosure. Therefore, for the beneficial effects that may be achieved, reference may be made to the beneficial effects in the corresponding methods, which will not be repeated here.

The embodiments of the disclosure provide a communication method, a terminal, a communication system, and a storage medium. In some embodiments, the terms such as "communication method", "information processing method" and "model performance monitoring method" may be interchangeable, the terms such as "communication apparatus", "information processing apparatus" and "model performance monitoring apparatus" may be interchangeable, and the terms such as "information processing system" and "communication system" may be interchangeable.

The embodiments of the disclosure are not exhaustive, but are only illustrative of some embodiments, and are not intended to be a specific limitation on the scope of protection of the disclosure. Without any contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementation methods in a certain embodiment may be arbitrarily combined. In addition, the embodiments may be arbitrarily combined. For example, some or all of the steps of different embodiments may be arbitrarily combined, and a certain embodiment may be arbitrarily combined with the optional implementation methods of other embodiments.

In each embodiment of the disclosure, unless otherwise specified or there is a logical conflict, the terms and/or descriptions between the embodiments are consistent and reference may be made to each other, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular form, such as "a," "an," "the," "above," "said," "aforementioned," "this" or the like may refer to "one and only one," "one or more," "at least one" or the like. For example, when using articles such as "a," "an," "the"" in English translation, the noun after the article may be understood as either a singular expression or a plural expression.

In the embodiments of the disclosure, "a plurality of" refers to two or more.

In some embodiments, the terms "at least one of," "one or more," "a plurality of," "multiple" or the like may be used interchangeably.

In the embodiments of the disclosure, descriptions such as "at least one of A or B", "A and/or B", "in one case, then A; in another case, then B", "in response to a case A, in response to another case B", may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed; executing both A and B, that is, in some embodiments, both A and B are executed. The same applies similarly when there are more branches such as A, B, C, etc.

In some embodiments, descriptions such as "A or B" may, depending on the context, include the following technical solutions: executing A regardless of B, that is, in some embodiments, A; executing B regardless of A, that is, in some embodiments, B; selectively executing A or B, that is, in some embodiments, one is selected from A and B to be executed. The same applies similarly when there are more branches such as A, B, C, etc.

The prefixes such as "first" and "second" in the embodiments of the disclosure are only used to distinguish different described objects, and are not used as restrictions on the position, order, priority, quantity or content of the described objects. The statement of the described object refers to the description in the context of the claims or embodiments, and should not constitute unnecessary restrictions due to the use of prefixes. For example, if the described object is a "field", the ordinal number before the "field" in "the first field" and "the second field" does not limit the position or order between the fields, and the "first" and "second" are not used to have a limitation on whether the fields modified by these terms are in the same message, nor are they used to have a limitation on the order of "the first field" and "the second field". As another example, if the described object is a "level", the ordinal number before the "level" in "the first level" and "the second level" does not limit the priority between the levels. As another example, the number of described objects is not limited by the ordinal number and may be one or more. Taking "the first apparatus" as an example, the number of apparatus may be one or more. In addition, the objects modified by different prefixes may be the same or different. For example, if the described object is "apparatus," "the first apparatus" and "the second apparatus" may be the same apparatus or different apparatus, and their types may be the same or different. As another example, if the described object is "information," "the first information" and "the second information" may be the same information or different information, and their contents may be the same or different.

In some embodiments, "including A," "containing A," "configured to indicate A," and "carrying A" may be interpreted as directly "carrying A" or "indirectly indicating A".

In some embodiments, terms such as "time/frequency" and "time/frequency domain" refer to a time domain and/or frequency domain.

In some embodiments, terms such as "in response to," "in response to determining (that)," "in a case where," "at," "when," "if," "in case that," "in case of" and so on may be used interchangeably.

In some embodiments, terms such as "greater than," "greater than or equal to," "not less than," "more than," "more than or equal to," "not smaller than," "higher than," "higher than or equal to," "not lower than," and "above" may be used interchangeably. Terms such as "smaller than," "smaller than or equal to," "not greater than," "less than," "less than or equal to," "not more than," "lower than," "lower than or equal to," "not higher than," and "below" may be used interchangeably.

In some embodiments, an apparatus may be interpreted as physical or virtual, and its name is not limited to the names mentioned in the embodiments, such as "apparatus," "equipment," "device," "circuit," "network element," "node," "function," "unit," "section," "system," "network," "chip," "chip system," "entity," and "subject," which may be used interchangeably.

In some embodiments, the term "network" may be interpreted as devices included in the network (e.g., access network device, core network device or the like).

In some embodiments, the following terms may be used interchangeably: "access network device (AN device)," "radio access network device (RAN device)," "base station (BS)," "radio base station," "fixed station," "node," "access point," "transmission point (TP)," "reception point (RP)," "transmission/reception point (TRP)," "panel," "antenna panel," "antenna array," "cell," "macro cell," "small cell," "femto cell," "pico cell," "sector," "cell group," "serving cell," "carrier," "component carrier," "bandwidth part (BWP)" and so on.

In some embodiments, the following terms may be used interchangeably: "terminal," "terminal device," "user equipment (UE)," "user terminal," "mobile station (MS)," "mobile terminal (MT)," "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client "and so on.

In some embodiments, the access network device, the core network device, or the network device may be replaced by a terminal. For example, the communication between the access network device, the core network device or the network device and the terminal is replaced by a structure of the communication between multiple terminals (for example, also referred to as device-to-device (D2D), vehicle-to-everything (V2X), or the like), or may use various embodiments of the disclosure. In this case, it may also be set as a structure in which the terminal has all or part of the functions of the access network device. In addition, terms such as "uplink" and "downlink" may also be replaced by terms corresponding to the communication between terminals (for example, "side"). For example, "uplink channel", "downlink channel" or the like may be replaced by "side channel", and "uplink," "downlink" or the like may be replaced by "side link".

In some embodiments, the terminal may be replaced by an access network device, a core network device or a network device. In this case, the access network device, the core network device or the network device may also be configured to have a structure that has all or part of the functions of the terminal.

In some embodiments, the acquisition of data, information or the like may comply with the laws and regulations of the country where the data is obtained.

In some embodiments, data, information or the like may be obtained with the consent of the user.

In addition, each element, each row or each column in the table of the embodiments of the disclosure may be implemented as an independent embodiment, and the combination of any elements, any rows or any columns may also be implemented as an independent embodiment.

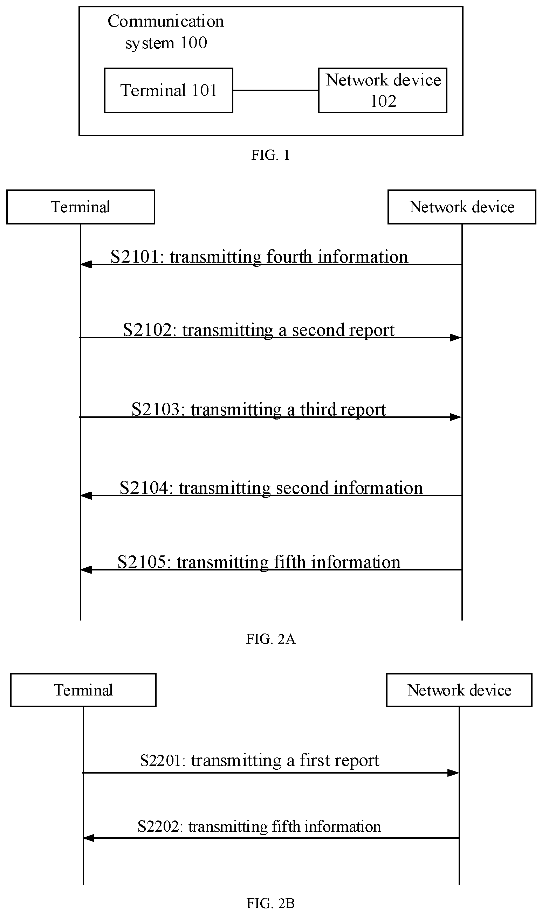

FIG. 1 is a schematic diagram illustrating an architecture of a communication system according to an embodiment of the disclosure. As illustrated in FIG. 1, a communication system 100 includes a terminal 101 and a network device 102. In some embodiments, the network device 102 may include at least one of an access network device and a core network device.

In some embodiments, the terminal 101 includes, but is not limited to, for example, at least one of a mobile phone, a wearable device, an internet of things device, a vehicle with communication function, a smart vehicle, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city or a wireless terminal in smart home.

In some embodiments, the access network device is for example a node or device that accesses a terminal to a wireless network. The access network device may include, but is not limited to, at least one of: an evolved NodeB (eNB), a next generation evolved NodeB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, or an access node in a wireless fidelity (WiFi) system.

In some embodiments, the technical solution of the disclosure may be applicable to the Open RAN architecture. In this case, the interfaces between or within the access network devices involved in the embodiments of the disclosure may become internal interfaces of the Open RAN, and the processes and information interactions between these internal interfaces may be implemented through software or programs.

In some embodiments, the access network device may be composed of a centralized unit (central unit, CU) and a distributed unit (DU), in which the CU may also be referred to as a control unit. The CU-DU structure may be used to split the protocol layer of the access network device, with some functions of the protocol layer being centrally controlled by the CU, and the remaining part or all of the functions of the protocol layer being distributed in the DU. The DU is centrally controlled by the CU. The disclosure is not limited to this.

In some embodiments, the core network device may be a device including a first network element, a second network element and etc., may be multiple devices or a group of devices including all or part of a first network element, a second network element and etc. The network element may be virtual or physical. The core network may include, for example, at least one of an evolved packet core (EPC), a 5G core network (5GCN), or a next generation core (NGC).

It would be understood that the communication system described in the embodiments of the disclosure is for the purpose of more clearly illustrating the technical solutions of the embodiments of the disclosure, and does not constitute a limitation on the technical solutions of the embodiments of the disclosure. A person skilled in the art may know that with the evolution of the system architecture and the emergence of new business scenarios, the technical solutions of the embodiments of the disclosure are also applicable to similar technical problems.

The following embodiments of the disclosure may be applied to the communication system 100 illustrated in FIG. 1 or part of the subject, but the disclosure are not limited to the above. The subjects illustrated in FIG. 1 are examples, and the communication system may include all or some of the subjects in FIG. 1 or may include other subjects other than FIG. 1. The number and form of the subjects are arbitrary, and each subject may be physical or virtual. The connection relationship between the subjects is an example. For example, the subjects may be connected or disconnected, and the connection may be in any manner, which may be a direct connection or an indirect connection and may be a wired connection or a wireless connection.

The embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), Global System for Mobile communications (GSM^{TM}), CDMA2000, Ultra Mobile Broadband (UMB), IEEE 802.11 (Wi-Fi^{TM}), IEEE 802.16 (WiMAX^{TM}), IEEE 802.20, Ultra-WideBand (UWB), Bluetooth^{TM}, Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems may also be combined (for example, a combination of LTE or LTE-A and 5G, etc.) for application.

In some embodiments, for instance, when the communication frequency band falls within Frequency Range 2, due to a rapid attenuation of high-frequency channels, beam-based transmission and reception are required to ensure coverage.

In some embodiments, a base station configures a reference signal resource set for beam measurement. After measuring reference signal resources in the reference signal resource set, the terminal reports identity/identities (ID/IDs) of X relatively strong reference signal resource(s) as well as corresponding L1-RSRP and/or L1-SINR. However, there is a problem that, since each reference signal resource among X reference signal resource(s) included in the reference signal resource set configured by the base station corresponds to a different transmit beam of the base station, then for each reference signal, the terminal needs to perform measurement using all receive beams for that reference signal, and obtain beam measurement quality corresponding to each receive beam, and determine the optimal beam measurement quality. Therefore, the quantity of beam pairs to be measured by the terminal is M*N, where M denotes the quantity of base station transmit beams and N denotes the quantity of terminal receive beams, which results in excessive computation and high latency.

Regarding this, it is provided in some embodiments of the present disclosure that an AI model may be used to obtain beam information.

Specifically, for a spatial-domain prediction: the terminal measures L1-RSRP of Set B which may also include beam or beam pair IDs and inputs it into an AI model to predict L1-RSRP of Set A.

Optionally, Set B and Set A have a relationship, including the following two types:
i. Set B is a subset of Set A. For example, Set A contains 32 reference signals each corresponding to a beam direction; Set B contains N reference signals thereamong (e.g., N=8). This example only considers transmit beams.
   If beam pairs are taken into account, terminal receive beams also need to be considered. For example, with 32 transmit beams and 4 terminal receive beams, Set A corresponds to 32*4 beam pairs; Set B may be 32 or 16 beam pairs thereamong.
ii. Set B is of wide beams, while Set A is of narrow beams. For example, Set A contains 32 reference signals each corresponding to a beam direction, and 32 reference signals cover a 120-degree direction; Set B contains another N reference signals, e.g., N=8, and these N reference signals also cover a 120-degree direction, meaning that the beam direction of each reference signal in Set B covers the beam directions of more than one reference signals in Set A. It can be understood that the 32/N reference signals in Set A are in a quasi co-location (QCL) Type D with the same reference signal in Set B.

In some of the following embodiments, Set A may also be referred to as a second beam set, and Set B as a first beam set.

In some embodiments, if AI model performance monitoring is not required and the AI model is pre-trained, the base station only needs to transmit reference signals of Set B periodically (e.g., at a first period). Then by measuring, by the terminal, L1-RSRP of reference signals in Set B and inputting the results into the AI model, the AI model may output L1-RSRP of all beams or beam pairs in Set A, or IDs of the X strongest reference signals or beam pairs among the 32 reference signals in Set A.

In some embodiments, if AI model performance monitoring is required, in addition to transmitting Set B, the base station needs to periodically transmit reference signals of Set A (e.g., at a second period, which may be longer than the first period; as for whether the second period is a multiple of the first period or not, or how much larger it is than the first period, there are no restrictions here). The terminal then measures Set B and inputs the results into the AI model, to generate predicted beam information and report the same to the base station; the terminal also measures L1-RSRP of all reference signals in Set A to obtain beam information to report to the base station as beam information obtained via conventional methods. If Set B is a subset of Set A, this means that the terminal only needs to measure all beams or beam pairs in Set A.

In some embodiments, for a time-domain prediction, the terminal measures L1-RSRP of Set B at historical time instances and inputs it into an AI model, to predict L1-RSRP of Set A at future time instances. Besides the two relationships described above between Set B and Set A, there is another one that Set B is identical to Set A. Optionally, if the AI model is adopted, reference signals for future time instants may not need to be transmitted, and beam information is obtained via AI model output for reporting to the base station.

In some embodiments, reference signals for future time instants also need to be transmitted, and the terminal measures the reference signals for future time instants and obtains beam information to report to the base station. Therefore, during model performance monitoring, similar to spatial-domain beam prediction, the base station needs to periodically transmit the transmit beams in Set B and Set A, and the terminal needs to measure all beams or beam pairs in Set B and Set A.

With the AI model, for example, the terminal originally needs to measure a total of M*N beam pairs (M denotes the quantity of base station transmit beams and N denotes the quantity of terminal receive beams); however, with the AI model, for a spatial-domain beam prediction, the terminal only needs to measure a portion of the M*N beam pairs (e.g., 1/8 or 1/4 thereof), and by inputting the measured beam quality of these beam pairs into the AI model, the model may output beam information for all M*N beam pairs. For a time-domain beam prediction, the terminal may measure beam quality of beam pairs at historical time instances to predict beam information of beam pairs at future time instances. Certainly, both the input and output of the model may ignore beam quality or IDs of beam pairs and only consider beam quality or IDs of downlink transmit beams, i.e., an AI model based on downlink beams rather than beam pairs.

However, since AI models have a service life or a certain scope of application, such as specifically applied environments, some are suitable for suburbs, some for urban areas, some for indoor settings, or some for morning and evening rush hours, and some for less crowded roads during work hours, it is necessary to monitor the performance of AI models in real time. If an AI model has poor performance, AI model update or switching may be required.

In some embodiments, for a network-side model, when the network side conducts monitoring, the content reported by the terminal may include the following two parts of data. One part of the data is used for network-side model inputting, such as RSRP of the beam (pair) in Set B used for model input, or RSRP of the beam (pair) and corresponding ID of the beam (pair); the network side, based on the input Set B, obtains the predicted optimal N beam (pair) ID and/or RSRP of Set A. The output RSRP here may be the RSRP(s) respectively corresponding to one or more beams in Set A. The other part of the data includes the actual measured optimal N beam (pair) ID and/or RSRP in Set A by the terminal. The measured RSRP here may be the RSRP(s) respectively corresponding to one or more beams in Set A.

In some embodiments, for a terminal-side model, when the network side conducts monitoring, the content reported by the terminal includes the following two parts of data. One part of the data is the output of the UE-side model, such as RSRP of the beam (pair) in Set A output by the model, and/or the ID of the beam (pair); that is, the predicted beam information of Set A output by the model. The other part of the data includes the actual measured optimal N beam (pair) ID and/or RSRP in Set A by the terminal, that is, the measured beam information of Set A that is actually measured.

FIG. 2A is an interactive schematic diagram of a communication method according to an embodiment of the disclosure. As illustrated in FIG. 2A, embodiments of the disclosure relate to a communication method, which includes the followings steps.

**Step S2101**: A network device transmits fourth information to a terminal.

In some embodiments, the fourth information is configured to indicate a value of L. Optionally, L is configured to indicate the maximum value of the number of instances of the first sample data transmitted by the terminal, where L may be a positive integer.

In some embodiments, step S2101 is optional, and the terminal may determine the value of L on its own. Optionally, the value of L may be a preset value by a protocol. Optionally, the value of L may be determined based on the number of instances of the second sample data transmitted in the third report in step S2103.

In some embodiments, the terminal receives the fourth information transmitted by the network device. Optionally, the terminal determines the value of L based on the fourth information.

In some embodiments, the terminal determines the value of L based on the quantity of instances of the second sample data in the third report. Optionally, the terminal determines the value of L preset by a protocol.

In some embodiments, the fourth information may be referred to as "quantity indication information", "sample quantity indication", etc. The present disclosure does not impose any limitation on its name.

**Step S2102**: the terminal transmits a second report to the network device.

In some embodiments, the second report includes the first data. Optionally, the first data is data related to AI model derivation. Optionally, the data related to AI model derivation may include data input to the AI model or data output from the AI model.

In some embodiments, the AI model is configured to predict beam information of a beam and/or a beam pair.

Illustratively, based on an AI model, the terminal may reduce the quantity of beams and/or beam pairs to be measured in the spatial domain, or reduce the frequency of actual measurement on beams and/or beam pairs in the time domain.

In some embodiments, the AI model performs a spatial-domain beam prediction, where the terminal may measure partial beams in the spatial domain and predict the beam information of other beams. Optionally, the AI model is configured to predict, according to an actual measurement result of a first beam set, beam information of a second beam set. Optionally, the AI model may, based on a measurement time instance, for example an actual measurement result of the first beam set at that measurement time instance, predict beam information of the second beam set, for example predicting the beam information of the second beam set at a prediction time instance corresponding to the measurement time instance, where the prediction time instance is identical to the measurement time instance.

Illustratively, the terminal may measure the beams and/or beam pairs in the first beam set at a certain time instance to obtain actual measurement results, and input these results into the AI model, thus to further obtain the beam information of the beams and/or beam pairs in the second beam set at that time instance.

In some embodiments, the AI model performs a time-domain beam prediction, where the terminal may measure the beam quality of beams and/or beam pairs at historical time instances to predict the beam information of beams and/or beam pairs at future time instances. Optionally, the AI model is configured to predict, according to an actual measurement result of a first beam set at N historical measurement time instances, beam information of a second beam set at M prediction time instances, where both N and M are integers greater than or equal to 1.

It would be understood that the values of N and M may be equal or unequal. For example, N may be greater than M, or N may also be less than M, which is not limited herein. The values of N and M may be configured according to the prediction performance of the AI model, e.g., they may be set as N=3 and M=2, which is also not limited herein.

Illustratively, the terminal may measure the beams and/or beam pairs in the first beam set at N measurement time instances before the current moment and obtain N actual measurement results. These N actual measurement results are then input into the AI model, thus to further obtain the beam information of the beams and/or beam pairs in the second beam set at M prediction time instances.

In some embodiments, the first beam set and the second beam set meet a preset condition. Optionally, the preset condition includes at least one of: the first beam set being identical to the second beam set; the first beam set being a subset of the second beam set; or the first beam set being of wide beams, and the second beam set being of narrow beams corresponding to the first beam set.

Illustratively, when only considering transmit beams, the second beam set (Set A) may include 32 reference signals, with each reference signal corresponding to a beam direction, and the first beam set (Set B) may include Q reference signals, for example, Q=8. When considering beam pairs, if the terminal corresponds to 4 receive beams, Set A may include 32*4 beam pairs, and Set B may include, from Set A, 32 beam pairs or 16 beam pairs, and so on.

Alternatively, the first beam set may be of wide beams, and the second beam set may be of narrow beams corresponding to the first beam set. The second beam set may include 32 reference signals, with each reference signal corresponding to a beam direction, and the 32 reference signals cover a 120-degree direction; the first beam set may include Q reference signals, for example, Q=8, and these 8 reference signals may also cover a 120-degree direction. That is, the beam direction of each reference channel in the second beam set covers the beam directions of more than one reference signals in the first beam set. Among them, the 32/Q reference signals in the second beam set is in a quasi co-location (QCL) Type D with the same reference signal in the second beam set.

In some embodiments, the AI model is deployed on the terminal, and the first data is the data output from the AI model. Optionally, the AI model is deployed on a network device, and the first data is the data input to the AI model.

Optionally, in case that the AI model is deployed on a network device, the first data may include RSRP of the beam (pair) in the first beam set for model input, or RSRP of the beam (pair) and corresponding ID of the beam (pair). Optionally, in case that the AI model is deployed on a terminal, the first data includes RSRP of the beam (pair) in the second beam set output by the model, and/or the ID of the beam (pair).

In case that the AI model is deployed on a terminal, the terminal may utilize the AI model to predict beam information and thus obtain the data output from the AI model. In case that the AI model is deployed on a network device, the terminal needs to send the data input by the AI model to the network device, such that the network device could utilize the AI model to predict beam information and obtain the data output from the AI model.

It would be understood that in case of the AI model performing a spatial-domain beam prediction, the input data to the AI model may be the actual measurement results for the first beam set, such as an actual measurement result of the first beam set at a time instance. The output data from the AI model may be the predicted beam information for the second beam set, such as the beam information for the second beam set at that time instance. In case of the AI model performing a time-domain beam prediction, the input data to the AI model may be an actual measurement result of the first beam set at N historical measurement time instances, and the output data from the AI model may be the beam information of the second beam set at M prediction time instances.

In some embodiments, the terminal may transmit a second report based on UCI. Optionally, the terminal may transmit the second report via PUCCH or PUSCH based on UCI.

In some embodiments, the terminal may transmit the second report using at least one instance of UCI. In case that a plurality of instances of UCI are used to transmit the second report, each instance of UCI may carry information that is part of the second report or the first data. For example, one instance of UCI may include one instance of the first sample data.

In some embodiments, the second report includes X instance(s) of first sample data, and the first sample data is a sample instance of the first data. Optionally, the first data may be composed of X instance(s) of the first sample data. Optionally, the first sample data is a subset of the first data.

In some embodiments, the AI model performs a spatial-domain beam prediction and is deployed on a network device, and the first sample data includes an actual measurement result for the first beam set, such as an actual measurement result for the first beam set at one time instance, where the first sample data is the data input to the AI model.

In some embodiments, the AI model performs a spatial-domain beam prediction and is deployed on a terminal, and the first sample data includes predicted beam information for the second beam set, such as the beam information of the second beam set at a time instance, where the first sample information is the data output from the AI model.

In some embodiments, the AI model performs a time-domain beam prediction and is deployed on a network device, and the first sample data includes an actual measurement result for the first beam set at N historical measurement time instances, where the first sample data is the data input to the AI model.

In some embodiments, the AI model performs a time-domain beam prediction and is deployed on a terminal, and the first sample data includes predicted beam information at M predicted time instances, where the first sample data is the data output from the AI model.

Illustratively, the second report or the first data may include X groups of the actual measurement result of the first beam set at historical measurement time instances, where one group of the actual measurement result may include the actual measurement result of the first beam set at N historical measurement time instances, and the first sample data may be one group of the actual measurement result of the first beam set at historical measurement time instances therefrom, with N being a positive integer.

Alternatively, the second report or the first data may include the actual measurement results of the first beam set at X time instances, and the first sample data may be the actual measurement result of the first beam set at one of these time instances where X is a positive integer.

In some embodiments, the terminal transmits the second report via at least one instance of UCI, each instance of the UCI including one instance of the first sample data and/or first information. Optionally, the terminal transmits the second report via X instances of UCI.

In some embodiments, the first information is configured to indicate that the first sample data included in the the each UCI is the i-th instance of the first sample data among the X instances of the first sample data, where i takes a positive integer value. Optionally, the first information is configured to indicate the index i the instance of the first sample data included in the each UCI corresponding to, where i takes a value of 0 or a positive integer.

In some embodiments, "i" may configured to indicate that the corresponding first sample data is the i-th instance of the first sample data among the X instances of the first sample data, or to indicate respective indices of the instances of the first sample data. For example, the network device may determine whether the corresponding second sample data has been received based on i.

That is, in case that "i" represents the number of instances of the first sample data, it may take values starting from 1 and upwards. In case that "i" represents the indices of instances of the first sample data, it may take values starting from 0.

In some embodiments, the network device receives a second report. Optionally, the network device receives the second report transmitted via at least one instance of UCI. Optionally, the network device receives the second report transmitted via X instances of UCI, where each instance of the UCI includes one instance of the first sample data and/or the first information.

In some embodiments, the "i" corresponding to the first sample data in a next instance of the UCI to be transmitted by the terminal is set to 1, upon the terminal determining that the quantity "i" corresponding to the first sample data in a currently transmitted instance of the UCI reaches L.

In some embodiments, the "i" corresponding to the first sample data in a next instance of the UCI to be transmitted by the terminal is set to 0, upon the terminal determining that the index "i" corresponding to the first sample data in a currently transmitted instance of the UCI reaches L-1.

In some embodiments, the network device may, based on the first information, determine whether each instance of UCI as well as the corresponding first sample data and/or second sample data transmitted by the terminal have been received.

In some embodiments, the second report may also be referred to as "model derivation data", "model derivation report", etc. The present disclosure does not impose any limitation on its name.

**Step S2103**: the terminal transmits a third report to the network device.

In some embodiments, the third report includes the second data. Optionally, the second data includes actual measurement data corresponding to the data output from the AI model. The first data may be the data output from the AI model, or data obtained by the network device based on the first data. For example, the first data is the input data to the AI model, and the network device may obtain the corresponding AI model output data based on the first data.

Optionally, in case that the AI model is deployed on a network device, the second data may include the actual measured optimal N beam (pair) IDs and/or RSRPs in the second beam set by the terminal, and the measured RSRP here may be the RSRP(s) respectively corresponding to one or more beams in Set A. Optionally, in case that the AI model is deployed on a terminal, the second data may include the actual measured optimal N beam (pair) IDs and/or RSRPs in the second beam set by the terminal, and the measured RSRP here may be the RSRP(s) respectively corresponding to one or more beams in Set A.

Illustratively, In the case that the AI model is deployed on a network device, the first data includes the data inputted into the AI model, such as the actual measurement results at one or more time instances (such as measurement time instances) for the first beam set. The data outputted from the AI model may then include the beam information of the second beam set at these one or more time instances (such as prediction time instance corresponding to these measurement time instances). Correspondingly, the second data may include the actual measurement results of the second beam set at these one or more time instances. In the case of a spatial-domain beam prediction, the prediction time instance and the measurement time instance are the same time instance.

In some embodiments, the terminal may transmit the third report based on a RRC or a MAC CE. Optionally, the terminal may transmit the third report via PUSCH based on a RRC or MAC CE.

In some embodiments, the third report includes Y instance(s) of second sample data, where the second sample data is a sample instance of the second data. Optionally, Y is less than or equal to X.

In some embodiments, the second data may be composed of Y instance(s) of the second sample data. Optionally, the second sample data may be a subset of the second data.

In some embodiments, the AI model performs a spatial-domain beam prediction and is deployed on a network device, and the second sample data includes an actual measurement result for the second beam set, such as an actual measurement result for the second beam set at a time instance.

In some embodiments, the AI model performs a spatial-domain beam prediction and is deployed on a terminal, and the second sample data includes an actual measurement result for the second beam set, such as an actual measurement result for the second beam set at a time instance.

In some embodiments, the AI model performs a time-domain beam prediction and is deployed on a network device, and the second sample data includes an actual measurement result for the second beam set at M predicted time instances.

In some embodiments, the AI model performs a time-domain beam prediction and is deployed on a terminal, and the second sample data includes an actual measurement result at M predicted time instances.

In some embodiments, the third report includes L instance(s) of the second sample data. Optionally, the L instance(s) of the second sample data respectively correspond to, in a preset order, the instance(s) of the first sample data in the second report.

Optionally, the preset order may be, for example, the order in which the terminal transmits the instances of the first sample data, from the most recent to the least recent or from the least recent to the most recent. For instance, in case that a plurality of instances of UCI are used to transmit the second report, the instances of the first sample data correspond one-to-one with the instances of the second sample data in the third report based on their respective i, such as the index or the number corresponding to the instance of the first sample data.

Illustratively, in case that an instance of the first sample data most recently transmitted by the terminal is the predicted beam information for the second beam set or the actual measurement result for the first beam set at time instance P and the foremost instance of the second sample data in the third report may correspond to this instance of the first sample data, this instance of the second sample data may be the actual measurement result for the second beam set at time instance P. The second foremost instance of the second sample data in the third report may correspond to an instance of the first sample data transmitted prior to the aforementioned instance of the first sample data transmitted by the terminal, such as time instance P-1.

In some embodiments, the third report includes third information. Optionally, the third information is configured to indicate a quantity of the instance(s) of the second sample data in the third report, and the instance(s) of the second sample data respectively correspond to the instance(s) of the first sample data in the second report in the preset order. Alternatively, the third information includes L bit(s), where each bit is configured to indicate whether the third report includes an instance of second sample data corresponding to the each bit.

Illustratively, in case that the third information indicates the quantity of instances of the second sample data in the third report being J, then these J instances of the second sample data may correspond to the J instances of the first sample data most recently transmitted by the terminal, such as the J instances of the first sample data with the largest i values. That is, the first sample data transmitted by the terminal earliest has the lowest priority.

Alternatively, in case of the value of L being 4 and the third information being 1001, it may indicate that the third report only includes the instance of the second sample data corresponding to L-1 or the Lth instance of the first sample data, as well as the instance of the second sample data corresponding to L-4 or the L-3th instance of the first sample data. For example, the instance of the first sample data corresponding to L-1 or the Lth may be the most recent instance of the first sample data sent by the terminal to the network device, and the instance of the first sample data corresponding to L-4 or the L-3th may be the earliest instance of the first sample data sent by the terminal to the network device.

In some embodiments, the third information may be the lowest bit in the third report. For example, if the third report includes up to K instances of the second sample data, the first $\left⌈{log}_{2}K\right⌉$ bits of the third report may be configured to indicate the actual number of instances of the second sample data in the third report. Alternatively, the first L bits in the third report may be configured to indicate whether the third report includes the instances of the second sample data corresponding to respective instances out of the L instances of the first sample data in the second report.

In some embodiments, the number i corresponding to the next instance of UCI to be transmitted is set to 1 or the index i corresponding to the next instance of UCI to be transmitted is set to 0, upon the terminal determining that the quantity of instances of the second sample data that have been sent reaches L. Optionally, after the terminal transmits the third report, it sets the number i corresponding to the next instance of UCI to be transmitted to 1 or sets the index i corresponding to the next instance of UCI to be transmitted to 0.

In some embodiments, the network device receives the third report. Optionally, the network device determines the quantity of instances of the second sample data based on the third information. Optionally, the network device determines, based on the third information, whether the third report includes the instances of the second sample data corresponding to respective instances of the first sample data. Optionally, the network device determines the instances of the first sample data respectively corresponding to L instances of the second sample data. Optionally, the network device determines, based on the third information, the instance(s) of the the first sample data respectively corresponding to at least one instance of the second sample data.

In some embodiments, after receiving the third report, the network device executes at least one of steps S2104 and S2105.

In some embodiments, the third report may also be referred to as "actual measurement data", "real data information", etc. The present disclosure does not impose any limitation on its name.

In some embodiments, the third information may also be referred to as "quantity indication information", "actual measurement data indication information", etc. The present disclosure does not impose any limitation on its name.

**Step S2104**: The network device transmits second information to the terminal.

In some embodiments, the second information is configured to indicate that the network device has received L instance(s) of the first sample data and/or the second sample data. Optionally, the second information is configured to instruct the terminal to set the number i corresponding to the next instance of UCI to be transmitted to 1 or the index i corresponding to the next instance of UCI to be transmitted to 0.

Illustratively, the network device may transmit the second information to the terminal upon receiving L instance(s) of the first sample data.

Illustratively, the network device may transmit the second information to the terminal upon receiving L instance(s) of the second sample data.

Illustratively, the network device may transmit the second information to the terminal upon receiving L instance(s) of the first sample data and the instance(s) of the second sample data respectively corresponding to the L instance(s) of the first sample data.

In some embodiments, the second information may be transmitted by the network device upon receiving the third report. Optionally, the second information may be HARQ ACK information for PUSCH.

In some embodiments, the terminal receives the second information. Optionally, upon determining that the second information is received, the terminal sets the number i corresponding to the next instance of UCI to be transmitted to 1 or sets the index i corresponding to the next instance of UCI to be transmitted to 0.

In some embodiments, step S2104 is optional. For instance, the terminal may determine on its own whether to set the number i corresponding to the next instance of UCI to be transmitted to 1 or sets the index i corresponding to the next instance of UCI to be transmitted to 0.

In some embodiments, the second information may also be referred to as "data response information", "data acknowledgment information", etc. The present disclosure does not impose any limitation on its name.

**Step S2105**: The network device transmits fifth information to the terminal.

In some embodiments, the fifth information is configured to activate or deactivate the AI model. Optionally, the fifth information may include a bit, the value of which may be configured to indicate whether the terminal activates or deactivates the AI model. Optionally, the fifth information is configured to instruct the network device to deactivate the previously used AI model. Optionally, the fifth information is configured to indicate the network device the currently activated AI model.

Illustratively, the fifth information may include a bit. In case that the AI model is deployed on the terminal and the value of this bit is 1, it may be configured to instruct the terminal to activate or maintain the activated state of the AI model; in case that the value of this bit is 0, it may be configured to instruct the terminal to deactivate the AI model or not to activate it. Alternatively, in case that the AI model is deployed on a network device and the value of this bit is 0, this bit may be configured to instruct the network device to deactivate the currently used AI mode; in case that the value of this bit is 1, it may be configured to instruct the network device to activate and use the AI model.

In some embodiments, the first data and the second data are used to monitor the performance of the AI model. Optionally, the fifth information is determined based on the first data and the second data. Optionally, the network device transmits the fifth information to the terminal based on the first data and the second data.

In some embodiments, the network device determines a performance metric corresponding to the AI model based on the first data and the second data, and transmits the corresponding fifth information based on the performance metric.

Illustratively, in case that the AI model is a beam prediction model currently used by the terminal and the first data is the data output by the AI model, the network device may compare the received first data (such as the first sample data in the second report) with the second data (such as the corresponding second sample data in the third report) to determine whether the beam information output by the AI model is accurate, thus to determine whether to keep the AI model activated or deactivate it, and transmit the corresponding fifth information.

Alternatively, in case that the AI model is a candidate beam prediction model for the network device, and the first data is the input data for the AI model, the network device may first input the first data into the AI model and obtain the beam information output by the AI model, and compare the obtained information with the received second data to determine whether the beam information output by the AI model is superior to the currently used AI model, thus to determine whether to activate the candidate AI model and deactivate the currently used AI model, and transmit corresponding fifth information to inform the terminal of the AI model finally used by the network device.

In some embodiments, the fifth information may also be referred to as "model indication information", "deactivation indication information", etc. The present disclosure does not impose any limitation on its name.

In some embodiments, the name of information is not limited to names mentioned in the embodiments. The following terms may be used interchangeably: "information," "message," "signal," "signaling," "report," "configuration," "indication," "instruction," "command," "channel," "parameter," "domain," "field," "symbol," "code element/symbol," "codebook," "codeword," "codepoint," "bit," "data," "program," "chip" and so on.

In some embodiments, terms such as "uplink," "up-link" and "physical uplink" may be used interchangeably. Terms such as "downlink," "down-link" and "physical downlink" may be used interchangeably. Terms such as "side," "side link," "side communication," "side link communication," "direct connection," "direct link," "direct communication" and "direct link communication" may be used interchangeable.

In some embodiments, terms such as "downlink control information (DCI)," "downlink (DL) assignment," "DL DCI," "uplink (UL) grant," and "UL DCI" may be used interchangeably.

In some embodiments, terms such as "physical downlink shared channel (PDSCH)," "DL data" and the like may be used interchangeably, and terms such as "physical uplink shared channel (PUSCH)," "UL data" and the like may be used interchangeably.

In some embodiments, terms such as "synchronization signal (SS)," "synchronization signal block (SSB)," "reference signal (RS)," "pilot," and "pilot signal" may be used interchangeably.

In some embodiments, terms such as "moment," "time point," "time" and "time position" may be interchangeable, and terms such as "duration," "period," "time window," "window" and "time" may be interchangeable.

In some embodiments, terms such as "precoding," "precoder," "weight," "precoding weight," "quasi-co-location (QCL)," "transmission configuration indication (TCI) state," "spatial relation," "spatial domain filter," "transmission power," "phase rotation," "antenna port," "antenna port group," "layer," "the number of layers," "rank," "resource," "resource set," "resource group," "beam," "beam width," "beam angular degree," "antenna," "antenna element" and "panel" may be used interchangeably.

In some embodiments, terms "obtain," "acquire," "get," "receive," "transmit," "bidirectional transmission" and "send" and/or "receive" may be interchangeable, which may be interpreted as receiving from other entities, obtaining from a protocol, obtaining from upper layers, obtaining by self-processing, autonomous implementation, etc.

In some embodiments, terms such as "sending," "launching," "reporting," "issuing," "transmitting," "bidirectional transmission" and "sending" and/or "receiving" may be used interchangeably.

In some embodiments, terms such as "certain", "preseted", "preset", "set", "indicated", "a certain", "any", "first", etc. may be used interchangeably. Terms such as "certain A", "preseted A", "preset A", "set A", "indicated A", "a certain A", "any A", "first A" may be interpreted as A predefined in a protocol or the like, or as A obtained through setting, configuration, indication, etc., or as certain A, a certain A, any A, or first A, etc., but are not limited to these interpretations.

In some embodiments, the "judging" or "estimating" may be represented as, but is not limited to, a value (such as 0 or 1) of 1 bit, as a true value or a false value (Boolean value), or as a comparison of numerical values (for example, comparison with a predetermined value).

In some embodiments, "not expecting to receive" may be interpreted as not receiving on time domain resources and/or frequency domain resources, or as not performing any subsequent processing on the data after receiving the data. "Not expecting to send" may be interpreted as not sending, or as sending but not expecting the recipient to respond to the sent content.

The communication method involved in embodiments of the present disclosure may include at least one of steps S2101 to S2105. For example, step S2102 may be implemented as an independent embodiment, step S2103 may be implemented as an independent embodiment, step S2104 may be implemented as an independent embodiment, step S2105 may be implemented as an independent embodiment, step S2102 to step S2103 may be implemented as an independent embodiment, and step S2101, step S2102 and step S2103 may be implemented as an independent embodiment, but not limited to these.

In some embodiments, steps S2102 and S2103 may be executed simultaneously, and steps S2103 and S2104 may be executed in a exchanged order or simultaneously.

In some embodiments, steps S2101 and steps S2103 to S2105 are optional, and one or more of these steps may be omitted or replaced in different embodiments.

In some embodiments, steps S2101 to S2102, as well as steps S2104 and S2105, are optionall, and one or more of these steps may be omitted or replaced in different embodiments.

In some embodiments, other optional implementations described before or after the description corresponding to FIG. 2A may be referred to.

FIG. 2B is an interactive schematic diagram of a communication method according to an embodiment of the disclosure. As illustrated in FIG. 2B, embodiments of the disclosure relate to a communication method, which includes the followings steps.

**Step S2201**: A terminal transmits a first report to a network device.

In some embodiments, the first report includes both first data and second data.

For optional embodiments of the first data and the second data, reference may be made to the corresponding optional embodiments of steps S2102 and S2103 in FIG. 2A, as well as the related parts in the embodiments involved in FIG. 2A, which will not be elaborated herein.

In some embodiments, the terminal transmits the first report based on a RRC signaling or a MAC CE. Optionally, the terminal determines the AI model as an inactive model and transmits the first report based on a RRC signaling. Optionally, the terminal transmits the first report via PUSCH based on a RRC signaling or a MAC CE.

In some embodiments, the terminal transmits the first report based on UCI. Optionally, the terminal determines the AI model as an activated model and transmits the first report based on UCI. Optionally, the terminal sen transmits ds the first report via PUCCH or PUSCH based on UCI.

In some embodiments, the first report includes at least one data sample each including one instance of the first sample data and one instance of the second sample data corresponding to the one instance of the first sample data. Optionally, the terminal may transmit the first report with a plurality of instances of UCI, where each instance of UCI includes one data sample.

In some embodiments, the AI model performs a spatial-domain beam prediction and is deployed on a network device, and one data sample may include an actual measurement result for a first beam set at one time instance, referred to as one instance of the first sample data, as well as an actual measurement result for a second beam set at this time instance, referred to as the instance of the second sample data corresponding to the one instance of the first sample data.

In some embodiments, the AI model performs a spatial-domain beam prediction and is deployed on a terminal, and one data sample may include beam information of a second beam set at one time instance, referred to as one instance of the first sample data, as well as an actual measurement result for the second beam set at this time instance, referred to as the instance of the second sample data corresponding to the one instance of the first sample data.

In some embodiments, the AI model performs a time-domain beam prediction and is deployed on a network device, and one data sample may include an actual measurement result for a first beam set at N historical measurement time instances, referred to as one instance of the first sample data, as well as an actual measurement result for a second beam set at M predicted time instances, referred to as the instance of the second sample data corresponding to the one instance of the first sample data.

In some embodiments, the AI model performs a time-domain beam prediction and is deployed on a terminal, and one data sample may include predicted beam information at M predicted time instances, referred to as one instance of the first sample data, as well as an actual measurement result at M predicted time instances, referred to as the instance of the second sample data corresponding to the one instance of the first sample data.

For optional embodiments of the first sample data and the second sample data, reference may be made to the corresponding optional embodiments of steps S2102 and S2103 in FIG. 2A, as well as the related parts in the embodiments involved in FIG. 2A, which will not be elaborated herein.

In some embodiments, a data sample may also be referred to as "a pair of instances of sample data", "a set of instances of sample data", etc. The present disclosure does not impose any limitation on its name.

In some embodiments, the first data and the second data are configured to monitor the performance of the AI model.

In some embodiments, the network device receives the first report. Optionally, the network device monitors the performance of the AI model based on the first data and the second data. Optionally, after receiving the first report, the network device executes step S2202.

**Step S2202**: The network device transmits fifth information to the terminal.

For optional implementations of step S2202, reference may be made to the optional implementation of step S2105 in FIG. 2, as well as other related parts in the embodiments involved in FIG. 2, which will not be elaborated herein.

The communication method involved in embodiments of the present disclosure may include at least one of steps S2201 to S2202. For example, step S2201 may be implemented as an independent embodiment, and step S2202 may also be implemented as an independent embodiment.

In some embodiments, step S2202 is optional, and one or more of these steps may be omitted or replaced in different embodiments.

In some embodiments, other optional implementations described before or after the description corresponding to FIG. 2B may be referred to.

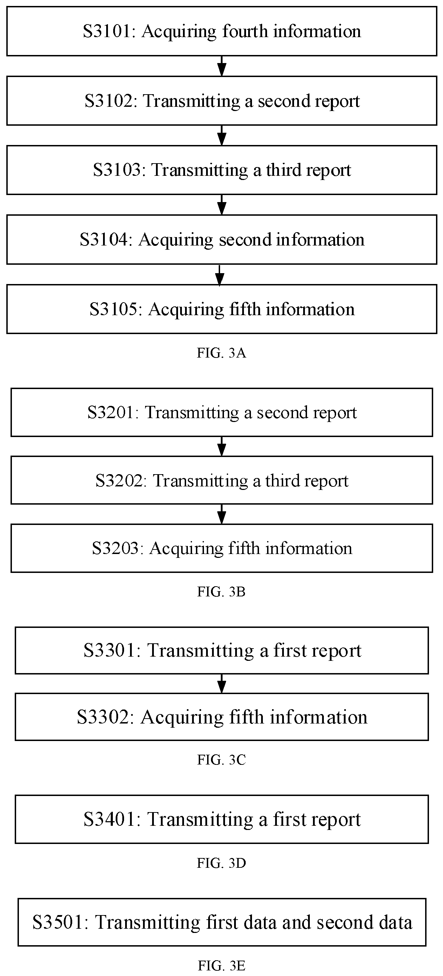

FIG. 3A is a flow diagram illustrating a communication method according to an embodiment of the present disclosure. As illustrated in FIG. 3A, embodiments of the disclosure relate to a communication method (terminal side), which includes the followings steps.

**Step S3101**: Acquiring fourth information.

For optional implementations of step S3101, reference may be made to the optional implementation of step S2101 in FIG. 2A, as well as other related parts in the embodiments involved in FIG. 2A, which will not be elaborated herein.

In some embodiments, the terminal receives the fourth information transmitted by the network device, but it is not limited to this. It may also receive the fourth information transmitted by other entities.

In some embodiments, the terminal acquires the fourth information specified by a protocol.

In some embodiments, the terminal acquires the fourth information from the upper layer(s).

In some embodiments, the terminal obtains the fourth information by performing processing.

In some embodiments, step S3101 is omitted, and the terminal autonomously implements the function indicated by the fourth information, or the aforementioned function is default or preset.

**Step S3102**: Transmitting a second report.

For optional implementations of step S3102, reference may be made to the optional implementation of step S2102 in FIG. 2A, as well as other related parts in the embodiments involved in FIG. 2A and FIG. 2B, which will not be elaborated herein.

In some embodiments, the terminal transmits the second report to the network device, but it is not limited to this. The second report may also be transmitted to other entities.

**Step S3103**: Transmitting a third report.

For optional implementations of step S3103, reference may be made to the optional implementation of step S2103 in FIG. 2A, as well as other related parts in the embodiments involved in FIG. 2A and FIG. 2B, which will not be elaborated herein.

In some embodiments, the terminal transmits the third report to the network device, but it is not limited to this. The third report may also be transmitted to other entities.

Optionally, the aforementioned second and third reports are used by the network device for monitoring the AI model.

**Step S3104**: Acquiring second information.

For optional implementations of step S3104, reference may be made to the optional implementation of step S2104 in FIG. 2A, as well as other related parts in the embodiments involved in FIG. 2A and FIG. 2B, which will not be elaborated herein.

In some embodiments, the terminal receives the second information transmitted by the network device, but it is not limited to this. It may also receive the second information transmitted by other entities.

In some embodiments, the terminal acquires the second information specified by a protocol.

In some embodiments, the terminal acquires the second information from the upper layer(s).

In some embodiments, the terminal obtains the second information by performing processing.

In some embodiments, step S3101 is omitted, and the terminal autonomously implements the function indicated by the second information, or the aforementioned function is default or preset.

**Step S3105**: Acquiring fifth information.

For optional implementations of step S3101, reference may be made to the optional implementation of step S2105 in FIG. 2A and step S2202 in FIG. 2B, as well as other related parts in the embodiments involved in FIG. 2A and FIG. 2B, which will not be elaborated herein.

In some embodiments, the terminal receives the fifth information tranmitted by the network device, but it is not limited to this. It may also receive the fifth information tranmitted by other entities.

In some embodiments, the terminal acquires the fifth information specified by a protocol.

In some embodiments, the terminal acquires the fifth information from the upper layer(s).

In some embodiments, the terminal obtains the fifth information by performing processing.

In some embodiments, step S3101 is omitted, and the terminal autonomously implements the function indicated by the fifth information, or the aforementioned function is default or preset.

The communication method involved in embodiments of the present disclosure may include at least one of steps S3101 to S3105. For example, step S3102 may be implemented as an independent embodiment, step S3103 may be implemented as an independent embodiment, step S3104 may be implemented as an independent embodiment, step S3105 may be implemented as an independent embodiment, step S3102 to step S3103 may be implemented as an independent embodiment, and step S3101, step S3102 and step S3103 may be implemented as an independent embodiment, but not limited to these.

In some embodiments, steps S3102 and S3103 may be executed simultaneously, and steps S3103 and S3104 may be executed in an exchanged order or simultaneously.

In some embodiments, steps S3101 and steps S3103 to S3105 are optional, and one or more of these steps may be omitted or replaced in different embodiments.

In some embodiments, steps S3101 to S3102, as well as steps S3104 and S3105, are optional, and one or more of these steps may be omitted or replaced in different embodiments.

FIG. 3B is a flow diagram illustrating a communication method according to an embodiment of the present disclosure. As illustrated in FIG. 3B, embodiments of the disclosure relate to a communication method (terminal side), which includes the followings steps.

**Step S3201**: Transmitting a second report.

For optional implementations of step S3201, reference may be made to the optional implementation of step S2102 in FIG. 2A and step S3102, as well as other related parts in the embodiments involved in FIG. 2A, FIG. 2B, and FIG. 3A, which will not be elaborated herein.

**Step S3202**: Transmitting a third report.

For optional implementations of step S3202, reference may be made to the optional implementation of step S2103 in FIG. 2A and step S3103, as well as other related parts in the embodiments involved in FIG. 2A, FIG. 2B, and FIG. 3A, which will not be elaborated herein.

**Step S3203**: Acquiring fifth information.

For optional implementations of step S3203, reference may be made to the optional implementation of step S2105 in FIG. 2A, step S2202 in FIG. 2B, and step S3105 in FIG. 3A, as well as other related parts in the embodiments involved in FIG. 2A, FIG. 2B, and FIG. 3A, which will not be elaborated herein.

The communication method involved in embodiments of the present disclosure may include at least one of steps S3201 to S3203. For example, step S3201 may be implemented as an independent embodiment, step S3202 may be implemented as an independent embodiment, step S3201 and step S3203 may be implemented as an independent embodiment, and step S3202 and step S3203 may be implemented as an independent embodiment, but it is not limited to these.

In some embodiments, steps S3201 and S3202 may be executed simultaneously.

In some embodiments, step S3203 is optional, and one or more of these steps may be omitted or replaced in different embodiments.

FIG. 3C is a flow diagram illustrating a communication method according to an embodiment of the present disclosure. As illustrated in FIG. 3C, embodiments of the disclosure relate to a communication method (terminal side), which includes the followings steps.

**Step S3301**: Transmitting a first report.

For optional implementations of step S3301, reference may be made to the optional implementation of step S2201 in FIG. 2B, as well as other related parts in the embodiments involved in FIG. 2A, FIG. 2B, FIG. 3A and FIG. 3B, which will not be elaborated herein.

**Step S3302**: Acquiring fifth information.

For optional implementations of step S3302, reference may be made to the optional implementation of step S2105 in FIG. 2A, step S2202 in FIG. 2B and step S3203 in FIG. 3B, as well as other related parts in the embodiments involved in FIG. 2A, FIG. 2B, FIG. 3A and FIG. 3B, which will not be elaborated herein.

The communication method involved in embodiments of the present disclosure may include at least one of steps S3301 to S3302. For example, step S3301 may be implemented as an independent embodiment, and step S3302 may also be implemented as an independent embodiment.

In some embodiments, step S3302 is optional, and one or more of these steps may be omitted or replaced in different embodiments.

FIG. 3D is a flow diagram illustrating a communication method according to an embodiment of the present disclosure. As illustrated in FIG. 3D, embodiments of the disclosure relate to a communication method (terminal side), which includes the followings steps.

**Step S3401**: Transmitting a first report.

For optional implementations of step S3301, reference may be made to the optional implementation of step S2201 in FIG. 2B and step S3301 in FIG. 3C, as well as other related parts in the embodiments involved in FIG. 2A, FIG. 2B, FIG. 3A, FIG. 3B and FIG. 3C, which will not be elaborated herein.

FIG. 3E is a flow diagram illustrating a communication method according to an embodiment of the present disclosure. As illustrated in FIG. 3E, embodiments of the disclosure relate to a communication method (terminal side), which includes the followings steps.

**Step S3501**: Transmitting first data and second data.

For optional implementations of step S3501, reference may be made to the optional implementation of steps S2101 to S2104 in FIG. 2A, step S2101 in FIG. 2B, steps S3101 to S3104 in FIG. 3A, steps S3201 to S3202 in FIG. 3B, step S3301 in FIG. 3C, and step S3401 in FIG. 3D, as well as other related parts in the embodiments involved in FIG. 2A, FIG. 2B, FIG. 3A, FIG. 3B, FIG. 3C and FIG. 3D, which will not be elaborated herein.

In some embodiments, the first data is data related to an AI model derivation, including data input to the AI model or data output from the AI model, and the second data includes actual measurement data corresponding to the data output from the AI model, where the AI model is configured to predict beam information of a beam and/or a beam pair.

In some embodiments, the AI model performs a spatial-domain beam prediction, configured to predict, according to an actual measurement result of a first beam set, beam information of a second beam set; or
the AI model performs a time-domain beam prediction, configured to predict, according to an actual measurement result of a first beam set at N historical measurement time instance(s), beam information of a second beam set at M prediction time instance(s),
where the first beam set and the second beam set meet a preset condition, and both N and M are integers greater than or equal to 1.

In some embodiments, the preset condition includes at least one of:
the first beam set being identical to the second beam set;
the first beam set being a subset of the second beam set; or
the first beam set being of wide beams, and the second beam set being of narrow beams corresponding to the first beam set.

In some embodiments, the AI model is deployed on a terminal, and the first data is the data output from the AI model; or
the AI model is deployed on the network device, and the first data is the data input to the AI model.

In some embodiments, the terminal transmitting the first data and the second data includes:
the terminal transmitting a first report, which includes both the first data and the second data; or
the terminal transmitting a second report and a third report separately, where the second report includes the first data and the third report includes the second data.

In some embodiments, the terminal transmitting the first report includes at least one of the following:
transmitting the first report based on a radio resource control (RRC) signaling or a medium access control control element (MAC CE); or
transmitting the first report based on uplink control information (UCI).

In some embodiments, the first report includes at least one data sample each including one instance of first sample data and one instance of second sample data corresponding to the one instance of the first sample data, where the first sample data is a sample instance of the first data, and the second sample data is a sample instance of the second data.

In some embodiments, the terminal separately transmitting the second report and the third report includes:
the terminal transmitting the second report based on UCI; and
the terminal transmitting the third report based on a RRC signaling or a MAC CE.

In some embodiments, the second report includes X instance(s) of first sample data, and the third report includes Y instance(s) of second sample data, with one instance of the second sample data corresponding to one instance of the first sample data, where the first sample data is a sample instance of the first data, the second sample data is a sample instance of the second data, and both X and Y are positive integers, with Y being less than or equal to X.

In some embodiments, the terminal transmitting the second report based on UCI includes:
the terminal transmitting the second report via at least one instance of the UCI, each instance of the UCI including one instance of first sample data and/or first information, where the first information is configured to indicate that the first sample data included in the each UCI is the i-th instance of the first sample data among the X instance(s) of the first sample data contained in the second report.

In some embodiments, the method includes:
setting the "i" corresponding to a next instance of the UCI to be transmitted by the terminal to 1 upon the terminal determining that second information is received, where the second information is configured to indicate that a network device has received L instance(s) of the first sample data and/or the second sample data; or
setting the "i" corresponding to a next instance of the UCI to be transmitted by the terminal to 1, upon the terminal determining that the "i" corresponding to a currently transmitted instance of the UCI reaches L, and/or the number of instance(s) of the second sample data that has been transmitted reaches L.

In some embodiments, the third report includes L instance(s) of the second sample data, which respectively correspond to the instance(s) of the first sample data in a preset order; or
the third report includes third information configured to indicate a quantity of the instance(s) of the second sample data in the third report, and the instance(s) of the second sample data respectively correspond to the instance(s) of the first sample data in the preset order; or the third information includes L bit(s), where each bit is configured to indicate whether the third report includes an instance of second sample data corresponding to the each bit.

In some embodiments, the method includes:
receiving, by the terminal, fourth information configured to indicate a value of L;
determining, by the terminal, a value of L according to the quantity of instance(s) of the second sample data in the third report; or
determining, by the terminal, a value of L preset by a protocol.

In some embodiments, the AI model performs a spatial-domain beam prediction, where
the AI model is deployed on a network device, the first sample data includes an actual measurement result of the first beam set, and the second sample data includes an actual measurement result of the second beam set; or
the AI model is deployed on the terminal, the first sample data includes predicted beam information of the second beam set, and the second sample data includes an actual measurement result of the second beam set.

In some embodiments, the AI model performs a time-domain beam prediction, where
the AI model is deployed on a network device, the first sample data includes an actual measurement result of a first beam set at N historical measurement time instance(s), and the second sample data includes an actual measurement result of a second beam set at M prediction time instance(s); or the AI model is deployed on the terminal, the first sample data includes predicted beam information at M prediction time instance(s), and the second sample data includes an actual measurement result at M prediction time instance(s).

In some embodiments, the method includes: receiving, by the terminal, fifth information configured to activate or deactivate the AI model.

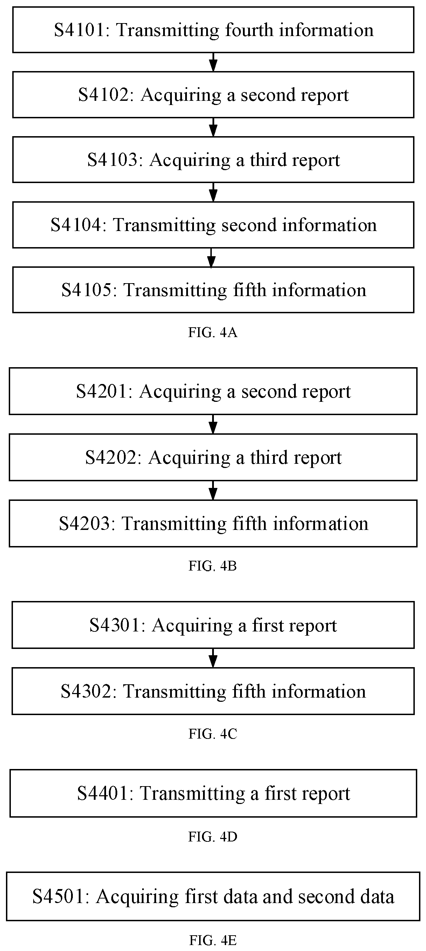

FIG. 4A is a flow diagram illustrating a communication method according to an embodiment of the present disclosure. As illustrated in FIG. 4A, embodiments of the disclosure relate to a communication method (network device side), which includes the followings steps.

**Step S4101**: Transmitting fourth information.

For optional implementations of step S4101, reference may be made to the optional implementation of step S2101 in FIG. 2A, as well as other related parts in the embodiments involved in FIG. 2A, which will not be elaborated herein.

In some embodiments, the network device transmits the fourth information to the terminal, but it is not limited to this. It may also transmit the fourth information to other entities.

**Step S4102**: Acquiring a second report.

For optional implementations of step S4102, reference may be made to the optional implementation of step S2102 in FIG. 2A, as well as other related parts in the embodiments involved in FIG. 2A, which will not be elaborated herein.

In some embodiments, the network device receives the second report transmitted by the terminal, but is not limited to this. It may also receive the second report transmitted by other entities.

**Step S4103**: Acquiring a third report.

For optional implementations of step S4103, reference may be made to the optional implementation of step S2103 in FIG. 2A, as well as other related parts in the embodiments involved in FIG. 2A, which will not be elaborated herein.

In some embodiments, the network device receives the second report transmitted by the terminal, but is not limited to this. It may also receive the second report transmitted by other entities.

**Step S4104**: Transmitting second information.

For optional implementations of step S4104, reference may be made to the optional implementation of step S2104 in FIG. 2A, as well as other related parts in the embodiments involved in FIG. 2A, which will not be elaborated herein.

In some embodiments, the network device transmits the second information to the terminal, but it is not limited to this. It may also transmit the second information to other entities.

**Step S4105**: Transmitting fifth information.

For optional implementations of step S4105, reference may be made to the optional implementation of step S2105 in FIG. 2A, as well as other related parts in the embodiments involved in FIG. 2A and FIG. 2B, which will not be elaborated herein.

In some embodiments, the network device transmits fifth information to the terminal, but it is not limited to this. It may also transmit the fifth information to other entities.

The communication method involved in embodiments of the present disclosure may include at least one of steps S4101 to S4105. For example, step S4102 may be implemented as an independent embodiment, step S4103 may be implemented as an independent embodiment, step S4104 may be implemented as an independent embodiment, step S4105 may be implemented as an independent embodiment, step S4102 to step S4103 may be implemented as an independent embodiment, and step S4101, step S4102 and step S4103 may be implemented as an independent embodiment, but not limited to these.

In some embodiments, steps S4102 and S4103 may be executed simultaneously, and steps S4103 and S4104 may be executed in an exchanged order or simultaneously.

In some embodiments, step S4101 and steps S4103 to S4105 are optional, and one or more of these steps may be omitted or replaced in different embodiments.

In some embodiments, steps S4101 to S4102, as well as steps S4104 and S4105, are optional, and one or more of these steps may be omitted or replaced in different embodiments.

FIG. 4B is a flow diagram illustrating a communication method according to an embodiment of the present disclosure. As illustrated in FIG. 4B, embodiments of the disclosure relate to a communication method (network device side), which includes the followings steps.

**Step S4201**: Acquiring a second report.

For optional implementations of step S4201, reference may be made to the optional implementation of step S2102 in FIG. 2A and step S4102, as well as other related parts in the embodiments involved in FIG. 2A, FIG. 2B, and FIG. 4A, which will not be elaborated herein.

**Step S4202**: Acquiring a third report.

For optional implementations of step S4202, reference may be made to the optional implementation of step S2103 in FIG. 2A and step S4103, as well as other related parts in the embodiments involved in FIG. 2A, FIG. 2B, and FIG. 3A, which will not be elaborated herein.

**Step S4203**: Transmitting fifth information.

For optional implementations of step S4203, reference may be made to the optional implementation of step S2105 in FIG. 2A, step S2202 in FIG. 2B, and step S4105 in FIG. 4A, as well as other related parts in the embodiments involved in FIG. 2A, FIG. 2B, and FIG. 4A, which will not be elaborated herein.

The communication method involved in embodiments of the present disclosure may include at least one of steps S4201 to S4203. For example, step S4201 may be implemented as an independent embodiment, step S4202 may be implemented as an independent embodiment, step S4201 and step S4203 may be implemented as an independent embodiment, and step S4202 and step S4203 may be implemented as an independent embodiment, but it is not limited to these.

In some embodiments, steps S4201 and S4202 may be executed simultaneously.

In some embodiments, step S4203 is optional, and one or more of these steps may be omitted or replaced in different embodiments.

FIG. 4C is a flow diagram illustrating a communication method according to an embodiment of the present disclosure. As illustrated in FIG. 4C, embodiments of the disclosure relate to a communication method (network device side), which includes the followings steps.

**Step S4301**: Acquiring a first report.

For optional implementations of step S4301, reference may be made to the optional implementation of step S2201 in FIG. 2B, as well as other related parts in the embodiments involved in FIG. 2A, FIG. 2B, FIG. 4A and FIG. 4B, which will not be elaborated herein.

**Step S4302**: Transmitting fifth information.

For optional implementations of step S4302, reference may be made to the optional implementation of step S2105 in FIG. 2A, step S2202 in FIG. 2B, step S4105 in FIG. 4A, and step S4203 in FIG. 4B, as well as other related parts in the embodiments involved in FIG. 2A, FIG. 2B, FIG. 4A and FIG. 4B, which will not be elaborated herein.

The communication method involved in embodiments of the present disclosure may include at least one of steps S4301 to S4302. For example, step S4301 may be implemented as an independent embodiment, and step S4302 may also be implemented as an independent embodiment.

In some embodiments, step S4302 is optional, and one or more of these steps may be omitted or replaced in different embodiments.

FIG. 4D is a flow diagram illustrating a communication method according to an embodiment of the present disclosure. As illustrated in FIG. 4D, embodiments of the disclosure relate to a communication method (network device side), which includes the followings steps.

**Step S4401**: Transmitting a first report.

For optional implementations of step S3301, reference may be made to the optional implementation of step S2201 in FIG. 2B and step S3301 in FIG. 3C, as well as other related parts in the embodiments involved in FIG. 2A, FIG. 2B, FIG. 3A, FIG. 3B and FIG. 3C, which will not be elaborated herein.

FIG. 4E is a flow diagram illustrating a communication method according to an embodiment of the present disclosure. As illustrated in FIG. 4E, embodiments of the disclosure relate to a communication method (network device side), which includes the followings steps.

**Step S4501**: Acquiring first data and second data.

For optional implementations of step S4501, reference may be made to the optional implementation of steps S2101 to S2104 in FIG. 2A, step S2101 in FIG. 2B, steps S4101 to S4104 in FIG. 4A, steps S4201 to S4202 in FIG. 4B, step S4301 in FIG. 4C, and step S4401 in FIG. 4D, as well as other related parts in the embodiments involved in FIG.2A, FIG. 2B, FIG. 4A, FIG. 4B, FIG.4C, and FIG. 4D, which will not be elaborated herein.

In some embodiments, the first data is data related to an AI model derivation, including data input to the AI model or data output from the AI model, and the second data includes actual measurement data corresponding to the data output from the AI model, where the AI model is configured to predict beam information of a beam and/or a beam pair.

In some embodiments, the AI model performs a spatial-domain beam prediction, configured to predict, according to an actual measurement result of a first beam set, beam information of a second beam set; or
the AI model performs a time-domain beam prediction, configured to predict, according to an actual measurement result of a first beam set at N historical measurement time instance(s), beam information of a second beam set at M prediction time instance(s),
where the first beam set and the second beam set meet a preset condition, and both N and M are integers greater than or equal to 1.

In some embodiments, the preset condition includes at least one of:
the first beam set being identical to the second beam set;
the first beam set being a subset of the second beam set; or
the first beam set being of wide beams, and the second beam set being of narrow beams corresponding to the first beam set.

In some embodiments, the AI model is deployed on a terminal, and the first data is the data output from the AI model; or
the AI model is deployed on the network device, and the first data is the data input to the AI model.

In some embodiments, the network device receiving the first data and the second data, includes:
the network device receiving a first report including both the first data and the second data; or
the network device receiving a second report and a third report separately, where the second report includes the first data and the third report includes the second data.

In some embodiments, the network device receiving the first report includes at least one of:
the network device receiving the first report based on a radio resource control (RRC) signaling or a medium access control control element (MAC CE); or
the network device receiving the first report based on uplink control information (UCI).

In some embodiments, the first report includes at least one data sample each including one instance of first sample data and one instance of second sample data corresponding to the one instance of the first sample data, where the first sample data is a sample instance of the first data, and the second sample data is a sample instance of the second data.

In some embodiments, the network device separately receiving the second report and the third report includes:
the network device receiving the second report based on UCI;
the network device receiving the third report based on a RRC signaling or a MAC CE.

In some embodiments, the second report includes X instance(s) of first sample data, and the third report includes Y instance(s) of second sample data, with one instance of the second sample data corresponding to one instance of the first sample data, where the first sample data is a sample instance of the first data, the second sample data is a sample instance of the second data, and both X and Y are positive integers, with Y being less than or equal to X.

In some embodiments, the network device receiving the second report based on UCI includes:
the network device receivingthe second report via at least one instance of the UCI, each instance of the UCI including one instance of first sample data and/or first information, where the first information is configured to indicate that the first sample data included in the each UCI is the i-th instance of the first sample data among the X instance(s) of the first sample data contained in the second report.

In some embodiments, the method includes:
the network device transmitting second information upon determining that L instance(s) of the first sample data and/or the second sample data has been received, where the second information is configured to instruct a terminal to set the "i" corresponding to a next instance of the UCI to be transmitted by the terminal to 1.

In some embodiments, the third report includes L instance(s) of the second sample data, which respectively correspond to the instance(s) of the first sample data in a preset order; or
the third report includes third information configured to indicate a quantity of the instance(s) of the second sample data in the third report, and the instance(s) of the second sample data respectively correspond to the instance(s) of the first sample data in the preset order; or the third information includes L bit(s), where each bit is configured to indicate whether the third report includes an instance of second sample data corresponding to the each bit.

In some embodiments, the method includes: transmitting, by the network device, fourth information configured to indicate a value of L.

In some embodiments, the AI model performs a spatial-domain beam prediction, where
the AI model is deployed on a network device, the first sample data includes an actual measurement result of the first beam set, and the second sample data includes an actual measurement result of the second beam set; or the AI model is deployed on the terminal, the first sample data includes predicted beam information of the second beam set, and the second sample data includes an actual measurement result of the second beam set.

In some embodiments, the AI model performs a time-domain beam prediction, where
the AI model is deployed on a network device, the first sample data includes an actual measurement result of a first beam set at N historical measurement time instance(s), and the second sample data includes an actual measurement result of a second beam set at M prediction time instance(s); or the AI model is deployed on the terminal, the first sample data includes predicted beam information at M prediction time instance(s), and the second sample data includes an actual measurement result at M prediction time instance(s).

In some embodiments, the method includes: transmitting, by the network device, the fifth information configured to activate or deactivate the AI model.

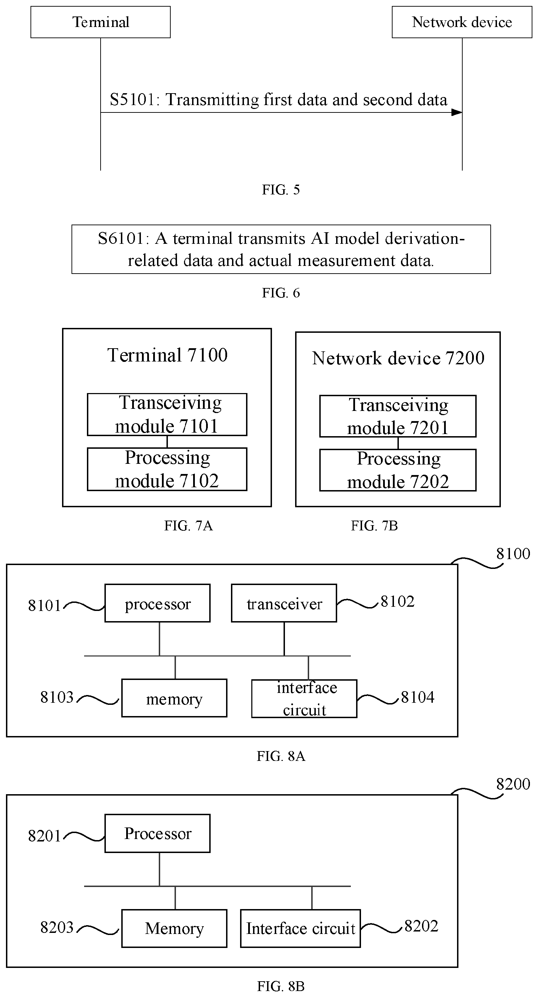

FIG. 5 is an interactive schematic diagram of a communication method according to an embodiment of the disclosure. As illustrated in FIG. 5, embodiments of the disclosure relate to a communication method, which includes the followings steps.

**Step S5101**: A terminal transmits first data and second data to a network device.

For optional implementations of step S4501, reference may be made to the optional implementation of steps S2101 to S2104 in FIG. 2A, step S2101 in FIG. 2B, steps S3101 to S3104 in FIG. 3A, steps S3201 to S3202 in FIG. 3B, step S3301 in FIG. 3C, step S3401 in FIG. 3D, step S3501 in FIG. 3E, steps S4101 to S4104 in FIG. 4A, steps S4201 to S4202 in FIG. 4B, step S4301 in FIG. 4C, step S4401 in FIG. 4D and step S4501 in FIG. 4E, as well as other related parts in the embodiments involved in FIG.2A, FIG. 2B, FIG.3A, FIG. 3B, FIG.3C, FIG. 3D, FIG.3E, FIG. 4A, FIG. 4B, FIG.4C, FIG. 4D, and FIG. 4E, which will not be elaborated herein.

In some embodiments, the aforementioned method may include the methods described in the embodiments of the terminal side, network device side, etc., which will not be elaborated here.

FIG. 6 is an interactive schematic diagram of a communication method according to an embodiment of the disclosure. As illustrated in FIG. 6, embodiments of the disclosure relate to a communication method, which includes the followings steps.

**Step S6101**: A terminal transmits AI model derivation-related data and actual measurement data.

In some embodiments, the data related to the AI model derivation includes data input to the AI model or data output from the AI model, and the actual measurement data includes an actual measurement result corresponding to the data output from the AI model.

Optionally, if the AI model is on the terminal side, the data related to the AI model derivation is the data output by the AI model, that is, the output of the AI model on the terminal side, namely the prediction information of Set A.

Optionally, if the model is on the terminal side, the data related to the AI model derivation is the data input to the AI model (measurement information of Set B). That is, the terminal side transmits the input data for the AI model to the network, and the network, based on the AI model, obtains the output of the AI model, namely the prediction information.

In some embodiments, for the terminal to transmit the AI model derivation-related data and actual measurement data, either of the following two manners may be adopted for transmission.

Manner 1: The terminal may include the AI model derivation-related data and actual measurement data into the same report for transmission.

Illustratively, for an inactive model, as it has not been used for prediction yet, the data related to AI model derivation does not need to be sent in a timely manner. That is, the data related to AI model derivation may be transmitted together with the actual measurement data used for performance monitoring, and multiple samples may be sent together, with each sample including a set of instances of data related to model derivation and a set of instances of actual measurement data. For instance, it may be transmitted via PUSCH based on a RRC signaling or MAC CE.

Illustratively, the report, for example, has a format as follows:
Sample#1: A first set of instances of data related to model derivation, and a first set of instances of actual measurement data;
Sample#2: A second set of instances of data related to model derivation, and a second set of instances of actual measurement data;
Sample#2: A second set of instances of data related to model derivation, and a second set of instances of actual measurement data.

It should be noted that for a spatial-domain beam prediction, one set of instances of data (such as one sample) corresponds to one measurement time instance.

In some embodiments, in case of the data related to model derivation being the data input to the model, then one set of instances of data includes measurement results of Set B and measurement results of Set A at one measurement time instance.

In some embodiments, in case of the data related to model derivation being the data output from the model, then one set of instances of data includes prediction results of Set A and measurement results of Set A at one measurement time instance.

In some embodiments, for a time-domain beam prediction, it may be obtaining prediction results at M predicted future time instances, based on measurement results of N historical measurement time instances.

In some embodiments, in case of the data related to model derivation being the data input to the model, then one set of instances of data includes measurement results of Set B at N history measurement time instances, and measurement results of Set A at M predicted future time instances.

In some embodiments, in case of the data related to model derivation being the data output from the model, then one set of instances of data includes prediction results of Set A at M predicted future time instances, and measured results of Set A at M predicted future time instances.

In some embodiments, for an active model, it has critical latency requirements for the data related to model derivation, which then may be transmitted based on beam measurement reports feedback by traditional channel state information (CSI), for example, by transmitting data that includes only one sample each time, with each sample containing a set of instances of data related to model derivation and actual measurement results. Alternatively, due to the critical latency requirement, it may be sent via Physical Uplink Control Channel (PUCCH) or Physical Uplink Shared Channel (PUSCH) based on UCI.

Manner 2: The terminal may transmit the AI model derivation-related data and actual measurement data in separate reports.

For example, for an active model, it has critical latency requirements for the data related to model derivation, which then may be transmitted based on UCI, while the actual measurement results are used for performance monitoring and have less critical latency requirements, so they may be transmitted based on a RRC signaling or MAC CE. In this way, the two may be transmitted separately. Below illustratively demonstrates in case of the two transmitted separately, how to indicate the one-to-one correspondence between the actual measurement results and the data related to model derivation.

Specifically, in some embodiments, for the model derivation-related data, in case that each instance of the model derivation-related data is transmitted, it is accompanied by a message indicating that a total of L samples have been uploaded, which also signifies that the current instance of the data is the Lth one. If the network device only receives L-4 and L-1, it indicates that the intermediate L-3 and L-2 were not successfully received by the network side.

In some embodiments, the maximum value of L is configured by the network side or specified by a protocol. After the actual measurement results corresponding to L samples are also transmitted or successfully received by the network, for example, in case that the network sends a hybrid automatic repeat-request (HARQ) acknowledge (ACK) message for PUSCH, the value of L is reset to start from 1.

In some embodiments, the maximum value of L may also correspond to the number of actual measurement results included in a report.

In some embodiments, after uploading L instances of the model derivation-related data, the terminal uploads a message indicating that multiple instances of the actual measurement data, corresponding to the instances of the model derivation-related data, are included in one report, and the lowest bit in this report indicates how many samples corresponding to the actual measured data are reported. Subsequent instances of the actual measurement data respectively corresponding to samples are arranged in an order from the latest sample to the earliest sample (or the reverse order).

In some embodiments, the lowest bit indicates how many samples corresponding to the actual measured data are reported. This may include at least one of the following three indication manners:
i. Only the number of samples is indicated, and these samples are those starting from the L-th sample and moving forward in sequence, meaning that the instance of the actual measurement data corresponding to the initial sample has the lowest priority for transmission.
ii. There are L bits, with each sample corresponding to one bit, where '1' indicates that the sample has its actual measurement data for transmission, while '0' indicates otherwise.
iii. Without this bit, all L instances are transmitted by default.

In some embodiments, upon receiving the instances of the model derivation-related data and the instances of actual measurement data with one-to-one correspondence, the network device obtains the performance metric, determines whether the model (or functionality) is active or deactive, and then sends indication information to the terminal.

In embodiments of the present disclosure, the terminal transmits the model derivation-related data and actual measurement data in two manners: together or separately, and ensures that when transmitting separately, the base station can correctly match the model derivation-related data with the actual measurement data one by one, thereby guaranteeing the accuracy of AI communication.

In the embodiments of the disclosure, some or all of the steps and their optional implementations may be arbitrarily combined with part or all of the steps in other embodiments, or may be arbitrarily combined with optional implementations of other embodiments.

In the embodiments of the disclosure, further provided is a device for implementing any one of the above methods. For example, there is provided a device including units or modules for implementing the steps executed by the terminal in any one of the above methods. As another example, there is provided another device including units or modules for implementing the steps executed by the network device (such as an access network device, a core network function node, a core network device, a terminal, a network device, etc.) in any one of the above methods.

It should be noted that the division of the units or modules in the above device is only a division of logical functions, and in actual implementation, they may be fully or partially integrated into one physical entity, or they may be physically separated. In addition, the units or modules in the device may be implemented in the form of a processor calling software. For example, the device includes a processor, the processor is connected to a memory, and instructions are stored in the memory. The processor calls the instructions stored in the memory to implement any of the above methods or implement the functions of the units or modules of the above device. The processor is, for example, a general-purpose processor, such as a central processing unit (CPU) or a microprocessor, and the memory is a memory inside the device or a memory outside the device. For example, the units or modules in the device may be implemented in the form of hardware circuits, and the functions of some or all of the units or modules may be realized by designing the hardware circuits. The above hardware circuits may be one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which may include a large number of logic gate circuits, and the connection relationship between the logic gate circuits is configured by a configuration file, to realize the functions of some or all of the above units or modules. All units or modules of the above devices may be realized in the form of a processor calling software, in the form of a hardware circuit, or in part by a processor calling software, and the rest by a hardware circuit.

In the embodiments of the disclosure, the processor is a circuit with signal processing capability. In one implementation, the processor may be a circuit with instruction reading and running capability, such as a central processing unit (CPU), a microprocessor, a graphics processing unit (GPU) (which may be a microprocessor), or a digital signal processor (DSP). In another implementation, the processor may implement certain functions through the logical relationship of a hardware circuit, and the logical relationship of the above hardware circuit is fixed or reconfigurable, such as a hardware circuit implemented by a processor as an application-specific integrated circuit (ASIC) or a programmable logic device (PLD), such as an FPGA. In a reconfigurable hardware circuit, the process of the processor loading a configuration document to implement the hardware circuit configuration may be the process of the processor loading instructions to implement the functions of some or all of the above units or modules. In addition, it may also be a hardware circuit designed for artificial intelligence, which may be an ASIC, such as a neural network processing unit (NPU), a tensor processing unit (TPU), a deep learning processing unit (DPU).

FIG. 7A is a schematic diagram illustrating a structure of a terminal according to an embodiment of the present disclosure. As illustrated in FIG. 7A, the terminal 7100 may include at least one of a transceiving module 7101, a processing module 7102, and the like. In some embodiments, the transceiving module 7101 is configured to transmit first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair. Optionally, the transceiving module 7101 is configured to perform at least one of the communication steps such as the transmitting and/or receiving-related steps performed by the terminal in any of the above methods, which are not repeated here. Optionally, the processing module 7102 is configured to perform at least one of the processing-related steps performed by the terminal in any of the above methods, which are not repeated here.

FIG. 7B is a schematic diagram illustrating a structure of a netword device according to an embodiment of the present disclosure. As illustrated in FIG. 7B, the network device 7200 may include at least one of a transceiving module 7201, a processing module 7202, and the like. In some embodiments, the transceiving module 7201 is configured to receive first data and second data, where the first data is data related to an artificial intelligence (AI) model derivation, including data input to the AI model or data output from the AI model, and the second data includes actual measurement data corresponding to the data output from the AI model, where the AI model is configured to predict beam information of a beam and/or a beam pair. Optionally, the transceiving module 7201 is configured to perform at least one of the communication steps such as the transmitting and/or receiving-related steps performed by the network device in any of the above methods, which are not repeated here. Optionally, the processing module 7202 is configured to perform at least one of the processing-related steps performed by the network device in any of the above methods, which are not repeated here.

In some embodiments, the transceiving module may include a transmitting module and/or a receiving module, which may be separate or integrated together. Optionally, the transceiving module may be interchangeable with a transceiver.

In some embodiments, the processing module may be a single module or consist of a plurality of sub-modules. Optionally, the plurality of sub-modules may individually perform all or part of the steps required to be executed by the processing module. Optionally, the processing module may be interchangeable with a processor.

FIG. 8A is a schematic diagram illustrating a structure of a communication device 8100 according to an embodiment of the disclosure. The communication device 8100 may be a network device (e.g., an access network device, a core network device, etc.), a terminal (e.g., a user device, etc.), a chip, chip system or processor that supports a network device to implement any of the above methods, or a chip, chip system or processor that supports a terminal to implement any of the above methods. The communication device 8100 may be configured to implement the methods described in the above method embodiments, and for the details, reference may be made the description in the above method embodiments.

As illustrated in FIG. 8A, the communication device 8100 includes one or more processors 8101. The processor 8101 may be a general-purpose processor or a dedicated processor, for example, a baseband processor or a central processing unit. The baseband processor may be configured to process the communication protocol and the communication data, and the central processing unit may be configured to control the communication device (such as a base station, a baseband chip, a terminal device, a terminal device chip, a DU or a CU), execute a program, and process the data of the program. Optionally, the communication device 8100 is configured to execute any of the above methods. Optionally, one or more processors 8101 are configured to call instructions such that the communication device 8100 performs any of the above methods.

In some embodiments, the communication device 8100 further includes one or more transceivers 8102. When the communication device 8100 includes one or more transceivers 8102, the one or more transceivers 8102 perform at least one of the communication steps such as the transmitting and/or receiving steps in any of the above methods, and the processor 8101 performs at least one of the other steps. In optional embodiments, the transceiver may include a receiver and/or a transmitter, and the receiver and the transmitter may be separate or integrated. Optionally, terms such as "transceiver," "transceiving unit," "transceiver machine," "transceiving circuit," "interface circuit," "interface", etc. may be replaced with each other; the terms such as "receiver," "receiving unit," "receiver machine" and "receiving circuit", etc. may be replaced with each other.

In some embodiments, the communication device 8100 further includes one or more memories 8103 for storing data. Optionally, all or some of memories 8103 may also be external to the communication device 8100. In optional embodiments, the communication device 8100 may include one or more interface circuits 8104. Optionally, the interface circuits 8104 are connected to the memory 8103, and the interface circuits 8104 may be configured to receive data from the memory 8103 or other devices, and may be configured to transmit data to the memory 8103 or other devices. For example, the interface circuits 8104 may read data stored in the memory 8103 and transmit the data to the processor 8101.

The communication device 8100 according to the above embodiments may be a network device or a terminal, but the scope of the communication device 8100 according to the disclosure is not limited thereto, and the structure of the communication device 8100 may not be limited by FIG. 8A. The communication device may be an independent device or may be part of a larger device. For example, the communication device may be: 1) an independent integrated circuit IC, or a chip, or a chip system or subsystem; (2) an IC collection including one or more ICs, for example, the above IC collection may also include a storage component for storing data and programs; (3) an ASIC, such as a modem; (4) a module that may be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, or the like; (6) others.

FIG. 8B is a schematic diagram illustrating a structure of a chip 8200 according to an embodiment of the disclosure. In the case where the communication device 8100 may be a chip or a chip system, reference may be made to the schematic diagram of the structure of the chip 8200 illustrated in FIG. 8B, but the disclosure is not limited thereto.

The chip 8200 includes one or more processors 8201. The chip 8200 is configured to execute any of the methods above.

In some embodiments, the chip 8200 further includes one or more interface circuits 8202. Optionally, terms such as "interface circuit," "interface," "transceiver pin" and the like may be interchangeable. In some embodiments, the chip 8200 further includes one or more memories 8203 for storing data. Optionally, all or some of the memories 8203 may be external to the chip 8200. Optionally, the interface circuits 8202 are connected to the memories 8203, and the interface circuits 8202 may be configured to receive data from the memories 8203 or other devices, and the interface circuits 8202 may be configured to transmit data to the memories 8203 or other devices. For example, the interface circuits 8202 may read data stored in the memories 8203 and transmit the data to the processor 8201.

In some embodiments, the interface circuit 8202 performs at least one of the communication steps such as the transmitting and/or receiving steps in the above methods. For instance, the interface circuit 8202 performing at least one of the transmitting and/or receiving-related steps in the above methods refers to that the interface circuit 8202 performs data interaction between the processor 8201, chip 8200, memory 8203, or transceiving devices. In some embodiments, the processor 8201 performs at least one of the other steps.

The modules and/or devices described in various embodiments such as virtual devices, physical devices, and chips may be arbitrarily combined or separated according to the situation. Optionally, some or all steps may also be executed collaboratively by multiple modules and/or devices, which is not limited here.

The disclosure also provides a storage medium, on which instructions are stored, and when the instructions are executed on the communication device 8100, the communication device 8100 performs any of the above methods. Optionally, the storage medium is an electronic storage medium. Optionally, the storage medium is, but is not limited to, a computer-readable storage medium, and it may also be a storage medium readable by other devices. Optionally, the storage medium may be, but is not limited to, a non-transitory storage medium, and it may also be a temporary storage medium.

The disclosure also provides a program product, and when the program product is executed by the communication device 8100, the communication device 8100 performs any of the above methods. Optionally, the program product is a computer program product.

The disclosure also provides a computer program, which, when executed on a computer, enables the computer to perform any one of the above methods.

## Claims

1. A communication method, comprising:
transmitting, by a terminal, first data and second data, wherein
the first data is data related to an artificial intelligence (AI) model derivation, comprising data input to the AI model or data output from the AI model, and
the second data comprises actual measurement data corresponding to the data output from the AI model,
wherein the AI model is configured to predict beam information of a beam and/or a beam pair.

2. The method according to claim 1, wherein
the AI model performs a spatial-domain beam prediction, configured to predict, according to an actual measurement result of a first beam set, beam information of a second beam set; or
the AI model performs a time-domain beam prediction, configured to predict, according to an actual measurement result of a first beam set at N historical measurement time instance(s), beam information of a second beam set at M prediction time instance(s),
wherein the first beam set and the second beam set meet a preset condition, and both N and M are integers greater than or equal to 1.

3. The method according to claim 2, wherein the preset condition comprises at least one of the following:
the first beam set being identical to the second beam set;
the first beam set being a subset of the second beam set; or
the first beam set being of wide beams, and the second beam set being of narrow beams corresponding to the first beam set.

4. The method according to any one of claims 1 to 3, wherein
the AI model is deployed on the terminal, and the first data is the data output from the AI model; or
the AI model is deployed on a network device, and the first data is the data input to the AI model.

5. The method according to any one of claims 1 to 4, wherein the terminal transmitting the first data and the second data comprises:
the terminal transmitting a first report comprising both the first data and the second data; or
the terminal transmitting a second report comprising the first data and a third report comprising the second data, separately.

6. The method according to claim 5, wherein the terminal transmitting the first report comprises at least one of:
transmitting the first report based on a radio resource control (RRC) signaling or a medium access control control element (MAC CE); or
transmitting the first report based on uplink control information (UCI).

7. The method according to claim 5 or 6, wherein the first report comprises at least one data sample each comprising one instance of first sample data and one instance of second sample data corresponding to the one instance of the first sample data, wherein the first sample data is a sample instance of the first data, and the second sample data is a sample instance of the second data.

8. The method according to claim 5, wherein the terminal separately transmitting the second report and the third report comprises:
the terminal transmitting the second report based on UCI; and
the terminal transmitting the third report based on a RRC signaling or a MAC CE.

9. The method according to claim 5 or 8, wherein the second report comprises X instance(s) of first sample data, and the third report comprises Y instance(s) of second sample data, with one instance of the second sample data corresponding to one instance of the first sample data, wherein the first sample data is a sample instance of the first data, the second sample data is a sample instance of the second data, and both X and Y are positive integers, with Y being less than or equal to X.

10. The method according to claim 9, wherein the terminal transmitting the second report based on UCI comprises:
the terminal transmitting the second report via at least one instance of the UCI, each instance of the UCI comprising one instance of first sample data and/or first information, wherein the first information is configured to indicate that the first sample data comprised in the each UCI is the i-th instance of the first sample data among the X instance(s) of the first sample data contained in the second report.

11. The method according to claim 10, comprising:
setting the "i" corresponding to a next instance of the UCI to be transmitted by the terminal to 1 upon the terminal determining that second information is received, wherein the second information is configured to indicate that a network device has received L instance(s) of the first sample data and/or the second sample data; or
setting the "i" corresponding to a next instance of the UCI to be transmitted by the terminal to 1, upon the terminal determining that the "i" corresponding to a currently transmitted instance of the UCI reaches L, and/or the number of instance(s) of the second sample data that has been transmitted reaches L.

12. The method according to any one of claims 9 to 11, wherein
the third report comprises L instance(s) of the second sample data, which respectively correspond to the instance(s) of the first sample data in a preset order; or
the third report comprises third information configured to indicate a quantity of the instance(s) of the second sample data in the third report, and the instance(s) of the second sample data respectively correspond to the instance(s) of the first sample data in the preset order; or the third information comprises L bit(s), wherein each bit is configured to indicate whether the third report comprises an instance of second sample data corresponding to the each bit.

13. The method according to claim 11 or 12, comprising:
receiving, by the terminal, fourth information configured to indicate a value of L;
determining, by the terminal, a value of L according to the quantity of instance(s) of the second sample data in the third report; or
determining, by the terminal, a value of L preset by a protocol.

14. The method according to any one of claims 6 to 13, wherein the AI model performs a spatial-domain beam prediction, wherein
the AI model is deployed on a network device, the first sample data comprises an actual measurement result of the first beam set, and the second sample data comprises an actual measurement result of the second beam set; or
the AI model is deployed on the terminal, the first sample data comprises predicted beam information of the second beam set, and the second sample data comprises an actual measurement result of the second beam set.

15. The method according to any one of claims 6 to 13, wherein the AI model performs a time-domain beam prediction, wherein
the AI model is deployed on a network device, the first sample data comprises an actual measurement result of a first beam set at N historical measurement time instance(s), and the second sample data comprises an actual measurement result of a second beam set at M prediction time instance(s); or
the AI model is deployed on the terminal, the first sample data comprises predicted beam information at M prediction time instance(s), and the second sample data comprises an actual measurement result at M prediction time instance(s).

16. The method according to any one of claims 1 to 15, comprising:
receiving, by the terminal, fifth information configured to activate or deactivate the AI model.

17. A communication method, comprising:
receiving, by a network device, first data and second data, wherein
the first data is data related to an artificial intelligence (AI) model derivation, comprising data input to the AI model or data output from the AI model, and
the second data comprises actual measurement data corresponding to the data output from the AI model, wherein the AI model is configured to predict beam information of a beam and/or a beam pair.

18. The method according to claim 17, wherein
the AI model performs a spatial-domain beam prediction, configured to predict, according to an actual measurement result of a first beam set, beam information of a second beam set; or
the AI model performs a time-domain beam prediction, configured to predict, according to an actual measurement result of a first beam set at N historical measurement time instance(s), beam information of a second beam set at M prediction time instance(s),
wherein the first beam set and the second beam set meet a preset condition, and both N and M are integers greater than or equal to 1.

19. The method according to claim 18, wherein the preset condition comprises at least one of the following:
the first beam set being identical to the second beam set;
the first beam set being a subset of the second beam set; or
the first beam set being of wide beams, and the second beam set being of narrow beams corresponding to the first beam set.

20. The method according to any one of claims 17 to 19, wherein
the AI model is deployed on a terminal, and the first data is the data output from the AI model; or
the AI model is deployed on the network device, and the first data is the data input to the AI model.

21. The method according to any one of claims 17 to 20, wherein the network device receiving the first data and the second data comprises:
the network device receiving a first report comprising both the first data and the second data; or
the network device receiving a second report comprising the first data and a third report comprising the second data, separately.

22. The method according to claim 21, wherein the network device receiving the first report comprises at least one of:
the network device receiving the first report based on a radio resource control (RRC) signaling or a medium access control control element (MAC CE); or
the network device receiving the first report based on uplink control information (UCI).

23. The method according to claim 21, wherein the first report comprises at least one data sample each comprising one instance of first sample data and one instance of second sample data corresponding to the one instance of the first sample data, wherein the first sample data is a sample instance of the first data, and the second sample data is a sample instance of the second data.

24. The method according to claim 21, wherein the network device separately receiving the second report and the third report comprises:
the network device receiving the second report based on UCI;
the network device receiving the third report based on a RRC signaling or a MAC CE.

25. The method according to claim 21 or 24, wherein the second report comprises X instance(s) of first sample data, and the third report comprises Y instance(s) of second sample data, with one instance of the second sample data corresponding to one instance of the first sample data, wherein the first sample data is a sample instance of the first data, the second sample data is a sample instance of the second data, and both X and Y are positive integers, with Y being less than or equal to X.

26. The method according to claim 25, wherein the network device receiving the second report based on UCI comprises:
the network device receivingthe second report via at least one instance of the UCI, each instance of the UCI comprising one instance of first sample data and/or first information, wherein the first information is configured to indicate that the first sample data comprised in the each UCI is the i-th instance of the first sample data among the X instance(s) of the first sample data contained in the second report.

27. The method according to claim 26, comprising:
the network device transmitting second information upon determining that L instance(s) of the first sample data and/or the second sample data has been received, wherein the second information is configured to instruct a terminal to set the "i" corresponding to a next instance of the UCI to be transmitted by the terminal to 1.

28. The method according to any one of claims 25 to 27, wherein
the third report comprises L instance(s) of the second sample data, which respectively correspond to the instance(s) of the first sample data in a preset order; or
the third report comprises third information configured to indicate a quantity of the instance(s) of the second sample data in the third report, and the instance(s) of the second sample data respectively correspond to the instance(s) of the first sample data in the preset order; or the third information comprises L bit(s), wherein each bit is configured to indicate whether the third report comprises an instance of second sample data corresponding to the each bit.

29. The method according to claim 27 or 28, comprising:
transmitting, by the network device, fourth information configured to indicate a value of L.

30. The method according to any one of claims 23 to 29, wherein the AI model performs a spatial-domain beam prediction, wherein
the AI model is deployed on a network device, the first sample data comprises an actual measurement result of the first beam set, and the second sample data comprises an actual measurement result of the second beam set; or
the AI model is deployed on the terminal, the first sample data comprises predicted beam information of the second beam set, and the second sample data comprises an actual measurement result of the second beam set.

31. The method according to any one of claims 23 to 29, wherein the AI model performs a time-domain beam prediction, wherein
the AI model is deployed on a network device, the first sample data comprises an actual measurement result of a first beam set at N historical measurement time instance(s), and the second sample data comprises an actual measurement result of a second beam set at M prediction time instance(s); or
the AI model is deployed on the terminal, the first sample data comprises predicted beam information at M prediction time instance(s), and the second sample data comprises an actual measurement result at M prediction time instance(s).

32. The method according to any one of claims 17 to 31, comprising:
transmitting, by the network device, the fifth information configured to activate or deactivate the AI model.

33. A terminal, comprising:
a transceiving module, configured to transmit first data and second data, wherein
the first data is data related to an artificial intelligence (AI) model derivation, comprising data input to the AI model or data output from the AI model, and
the second data comprises actual measurement data corresponding to the data output from the AI model, wherein the AI model is configured to predict beam information of a beam and/or a beam pair.

34. A network device, comprising:
a transceiving module, configured to receive first data and second data, wherein
the first data is data related to an artificial intelligence (AI) model derivation, comprising data input to the AI model or data output from the AI model, and
the second data comprises actual measurement data corresponding to the data output from the AI model, wherein the AI model is configured to predict beam information of a beam and/or a beam pair.

35. A terminal, comprising:
one or more processors;
a memory coupled to the one or more processors and comprising executable instructions that, when executed by the one or more processors, cause the terminal to perform the communication method according to any one of claims 1-16.

36. A network device, comprising:
one or more processors;
a memory coupled to the one or more processors and comprising executable instructions that, when executed by the one or more processors, cause the network device to perform the communication method according to any one of claims 17-32.

37. A communication system, comprising a terminal and a network device, wherein the terminal is configured to implement the communication method according to any one of claims 1-16, and the network device is configured to implement the communication method according to any one of claims 17-32.

38. A storage medium storing instructions, wherein when the instructions are run on a communication device, the communication device is caused to to execute the communication method according to any one of claims 1-16 or claims 17-32.
